# EUROPEAN PATENT APPLICATION

(11) **EP 4 109 356 A1**
(43) Date of publication of application: **28.12.2022**
(21) Application number: 21770827.0
(22) Date of filing: 15.03.2021
(51) Int. Cl.: G06N 20/20

(54) **APPARATUS AND METHOD FOR FEDERATED LEARNING, AND STORAGE MEDIUM**

(30) Priority: 18.03.2020 CN 202010191746
(71) Applicant: Sony Group Corporation, Minato-Ku, Tokyo, 108-0075 (JP)
(72) Inventor: WU, Songtao, Beijing 100028 (CN); XU, Kuanhong, Beijing 100028 (CN); SUN, Chen, Beijing 100028 (CN)
(74) Representative: D Young & Co LLP
(86) International application number: PCT/CN2021/080724
(87) International publication number: WO 2021/185197

(57) **Abstract**

The present disclosure relates to an apparatus, a method, and a storage medium for federated learning (FL). Various embodiments for FL are described. In an embodiment, a central processing apparatus can be configured to, for a first one of a plurality of distributed computing apparatuses: receive a report message from the first distributed computing apparatus, the report message including at least one of training data set information or device information of the first distributed computing apparatus; evaluate FL performance of the first distributed computing apparatus based on the report message of the first distributed computing apparatus; determine wireless resource requirements of the first distributed computing apparatus based on the FL performance of the first distributed computing apparatus; and notify a wireless network, via a message, of configuring wireless resources for the first distributed computing apparatus based on the wireless resource requirements.

## Description

### TECHNICAL FIELD

The present disclosure generally relates to machine learning and wireless communication technologies, and in particular to apparatuses, methods, and storage medium for federated learning (FL).

### BACKGROUND

In recent years, with continuous improvements of computing power of electronic devices and development of big data technology, artificial intelligence (AI) has achieved vigorous development. AI technology is expected to play a role in areas such as unmanned vehicles, medical care, and finance. AI is partly driven by big data, which involves multiple data owners in several fields. In most cases, data exists in islands. Due to issues such as industry competition, privacy and security, and complex administrative procedures, it requires huge costs to integrate data scattered in various places and institutions.

To meet data privacy, security and regulatory requirements while utilizing data, a machine learning framework named federated learning (FL) is designed. FL allows AI systems to jointly use their own data more efficiently and accurately. In the FL framework, multiple clients (such as computing apparatuses) cooperate with a central server (such as a central processing apparatus) to train a global model while keeping data locally, without exposing privacy or violating regulations. FL enables two or more data-using entities to use data together with data kept local, solving the problem of data islands.

On the one hand, the data generated during use of computing apparatuses can be an important data source for FL, thus the computing apparatuses can be appropriate clients to perform FL. On the other hand, in order to ensure FL performance, the differences in hardware performance of different computing apparatuses need to be considered; when a computing apparatus communicates with a central processing apparatus in a wireless manner, it is necessary to pay attention to the wireless communication performance of the computing apparatus.

### SUMMARY

A first aspect of the present disclosure relates to an electronic device for a central processing apparatus, wherein the central processing apparatus performs federated learning (FL) with a plurality of distributed computing apparatuses. The electronic device comprises a processing circuit configured to cause the central processing apparatus to, for a first distributed computing apparatus of the plurality of distributed computing apparatus: receive a report message from the first distributed computing apparatus, the report message including at least one of training data set information or device information of the first distributed computing apparatus; evaluate FL performance of the first distributed computing apparatus based on the report message of the first distributed computing apparatus; determine wireless resource requirements of the first distributed computing apparatus based on the FL performance of the first distributed computing apparatus; and notify a wireless network, via a message, of configuring wireless resources for the first distributed computing apparatus based on the wireless resource requirements.

A second aspect of the present disclosure relates to an electronic device for a first distributed computing apparatus, wherein the first distributed computing apparatus performs federated learning (FL) with a central processing apparatus and additional distributed computing apparatuses. The electronic device comprises a processing circuit configured to cause the first distributed computing apparatus to: send a report message to the central processing apparatus, the report message including at least one of training data set information or device information of the first distributed computing apparatus; and receive wireless resource configuration information from a wireless network, wherein the wireless resource configuration information is determined by the wireless network based on an indication message from the central processing apparatus.

A third aspect of the present disclosure relates to a method for federated learning (FL), wherein a central processing apparatus and a plurality of distributed computing apparatus perform the FL. The method comprises, by the central processing apparatus, for a first distributed computing apparatus of the plurality of distributed computing apparatus: receiving a report message from the first distributed computing apparatus, the report message including at least one of training data set information or device information of the first distributed computing apparatus; evaluating FL performance of the first distributed computing apparatus based on the report message of the first distributed computing apparatus; determining wireless resource requirements of the first distributed computing apparatus based on the FL performance of the first distributed computing apparatus; and notifying a wireless network, via a message, of configuring wireless resources for the first distributed computing apparatus based on the wireless resource requirements.

A fourth aspect of the present disclosure relates to a method for federated learning (FL), wherein a central processing apparatus and a plurality of distributed computing apparatus perform the FL. The method comprises, by a first distributed computing apparatus of the plurality of distributed computing apparatus: sending a report message to the central processing apparatus, the report message including at least one of training data set information or device information of the first distributed computing apparatus; and receiving wireless resource configuration information from a wireless network, wherein the wireless resource configuration information is determined by the wireless network based on an indication message from the central processing apparatus.

A fifth aspect of the present disclosure relates to a computer-readable storage medium having one or more instructions stored thereon. In some embodiments, the one or more instructions may, when executed by one or more processors of an electronic device, cause the electronic device to perform the methods according to various embodiments of the present disclosure.

A sixth aspect of the present disclosure relates to an apparatus for wireless communication, including components or units for performing operations of the methods according to the embodiments of the present disclosure.

The above summary is provided to summarize some exemplary embodiments in order to provide a basic understanding of the various aspects of the subject matter described herein. Therefore, the above-described features are merely examples and should not be construed as limiting the scope or spirit of the subject matter described herein in any way. Other features, aspects, and advantages of the subject matter described herein will become apparent from the Detailed Description described below in conjunction with the drawings.

### BRIEF DESCRIPTION OF THE DRAWINGS

A better understanding of the present disclosure can be achieved by referring to the detailed description given hereinafter in conjunction with the accompanying drawings. The same or similar reference numerals are used in the accompanying drawings to denote the same or similar components. The accompanying drawings together with the following detailed description are included in the specification and form a part of the specification, and are intended to exemplify the embodiments of the present disclosure and explain the principles and advantages of the present disclosure. In the accompanying drawings:
FIG. 1 illustrates a general federated learning (FL) process.
FIG. 2 illustrates an exemplary FL system according to an embodiment of the present disclosure.
FIG. 3A illustrates an exemplary electronic device for a central processing apparatus according to an embodiment of the present disclosure.
FIG. 3B illustrates an exemplary electronic device for a distributed computing apparatus according to an embodiment of the present disclosure.
FIG. 4 illustrates an exemplary process for evaluating FL performance of a distributed computing apparatus according to an embodiment of the present disclosure.
FIG. 5 illustrates another exemplary process for evaluating FL performance of a distributed computing apparatus according to an embodiment of the present disclosure.
FIGS. 6A and 6B illustrate exemplary processes for determining wireless resource requirements of distributed computing apparatuses according to embodiments of the present disclosure.
FIG. 7 illustrates an exemplary flow for transferring information between a distributed computing apparatus and a central processing apparatus according to an embodiment of the present disclosure.
FIG. 8 illustrates an exemplary process for FL according to an embodiment of the present disclosure.
FIGS. 9A and 9B illustrate schematic diagrams of differentiated FL opportunities according to embodiments of the present disclosure.
FIGS. 10 to 12 illustrate exemplary processes of supervision among multiple FL systems according to embodiments of the present disclosure.
FIG. 13 is a block diagram of an example configuration of a personal computer which can be used as a central processing apparatus according to an embodiment of the present disclosure.
FIG. 14 is a block diagram of an example configuration of a smartphone which can be used as a distributed computing apparatus according to an embodiment of the present disclosure.
FIG. 15 is a block diagram of an example of configuration of a car navigation device which can be used as a distributed computing apparatus according to an embodiment of the present disclosure.

Although the embodiments described in the present disclosure may have various modifications and alternatives, specific embodiments thereof are illustrated as examples in the accompany drawings and described in detail in this specification. It should be understood that the drawings and detailed description thereof are not intended to limit embodiments to the specific forms disclosed, but to cover all modifications, equivalents, and alternatives falling within the spirit and scope of the claims.

### DETAILED DESCRIPTION

The following describes representative applications of various aspects of the device and method according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

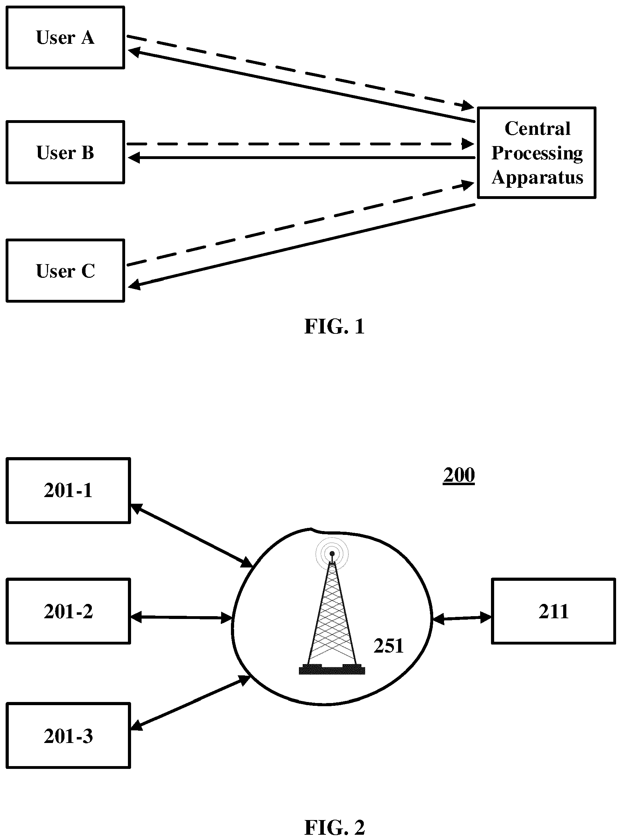

FIG. 1 illustrates a general federated learning (FL) process, providing a general description of the FL process. In the example of FIG. 1, the central processing apparatus controls and coordinates a user A, a user B, and a user C for federated learning. The purpose of the federated learning can include updating a global model through training, so that each user can perform a specific application or task in a manner close to artificial intelligence based on the updated global model. For example, inputting current context data into the global model can predict the output for that particular application or task. The particular application or task can include weather forecasting, automatic driving, intelligent voice assistants, and the like. In the weather forecasting application, inputting the current weather condition and location data into corresponding global model can predict the weather at that location. In the automatic driving application, inputting the current road condition and driving habits data into corresponding global model can suggest current driving behaviours.

In the present disclosure, the central processing apparatus and multiple users that train a same global model are referred to as a federated learning system. The global model is essential to accurately perform a particular application or task. The existing data of each user A to C about the particular application or task is required to train the global model. Federated learning can utilize the existing data of each user to train the global model while ensuring the privacy of user data. Specifically, as shown in FIG. 1, the central processing apparatus can provide the users A to C with an initial global model (corresponding to the solid lines), where the initial global model may be initially established by using data mining, conventional machine learning or the like based on, for example, data collected by the central processing apparatus. After obtaining the initial global model, each user A to C trains the global model individually using local data. For example, in the case where the users use the gradient descent algorithm, each user uses its own data to update model parameters to maximize the objective function. The model parameters corresponding to the maximization of the objective function are the updated parameters, which correspond to the updated model. After that, each user provides their respective update information to the central processing apparatus (corresponding to the dotted line). After obtaining the updated information from each user, the central processing apparatus can aggregate the updated information to obtain an updated global model.

The above process can be called a round of federated learning. If the federated learning falls short of the goal of the global model training (e.g., the performance gap is greater than a certain threshold compared to non-federated learning where all data is available to the central processing apparatus), the central processing apparatus can provide the updated global model to each user to initiate a new round of federated learning. The new round of federated learning process can be similar to the above description, so it will not be repeated. In this way, the prediction accuracy of the global model can be improved.

The training data and global model are two elements of federated learning. The data used in federated learning can be called training data, where each data sample can be called a training sample, and the set of training samples is called a training data set. In general, let **D={x₁, x₂, ..., xₘ}** denote a data set containing m samples, where each sample can be described by d attributes, then each sample **xᵢ=(xᵢ₁; xᵢ₂; ...; x_{id})** is a vector in a d-dimensional sample space X, xi ∈ X, where **xᵢⱼ** is the value of **xᵢ** on the jth attribute, and d is called the dimension of the sample **xᵢ**. In this example, the attributes of the sample can also be referred to as the components of the sample.

In federated learning, different global models can be established for different applications or tasks, as well as for different goals. An example of a global model can be a linear model, i.e., **f(x)** = **w₁x₁ + w₂x₂** + ... + **w_{d}x_{d}** + **b**. Federated learning can train the model with training data to determine the model parameters **wᵢ** and **b**.

FIG. 2 illustrates an exemplary federated learning system according to an embodiment of the present disclosure. As shown in FIG. 2, the federated learning system 200 includes distributed computing apparatuses 201-1 to 201-3, a central processing apparatus 211, and a wireless network 251. Here, 201 may be used to refer to the collection of the distributed computing apparatuses or any of the distributed computing apparatuses, and 201-1 to 201-3 may be used to refer to a particular distributed computing apparatus. The central processing apparatus 211 controls and coordinates the distributed computing apparatuses 201-1 to 201-3 for federated learning. In the example of FIG. 2, the distributed computing apparatus 201 communicates with the central processing apparatus 211 via the wireless network 251. Specifically, the global model and model update information may be communicated between the distributed computing apparatus 201 and the central processing apparatus 211 in a wireless manner. In the federated learning according to an embodiment of the present disclosure, the wireless communication performance of the distributed computing apparatus 201 can be considered, and/or wireless resource configuration requirements can be proposed for the distributed computing apparatus 201 to the wireless network 251, as described in detail later.

In an embodiment, the wireless network 251 can correspond to any one or more wireless communication systems. The wireless communication system can be a wireless communication system using time division duplex (TDD) or frequency division duplex (FDD), including but not limited to: a GSM system; a WCDMA system; a LTE or LTE-Advanced system; a WLAN, WiMAX system; a 5G New Radio (NR) system; a V2X, V2V, D2D and M2M system; and new systems under development or developed in the future.

In an embodiment, the distributed computing apparatus 201 can correspond to a Mobile Station (MS), a User Equipment (UE), or the like. The distributed computing apparatus 201 can be implemented as a device such as a mobile phone, a hand-held device, a media player, a computer, a laptop or a tablet, or virtually any type of wireless device. The distributed computing apparatus 201 can communicate using at least one of a variety of wireless communication technologies, including but not limited to: GSM, WCDMA, LTE, LTE-Advanced, WiMAX, WLAN, NR, V2X, V2V, D2D, M2M, and the like.

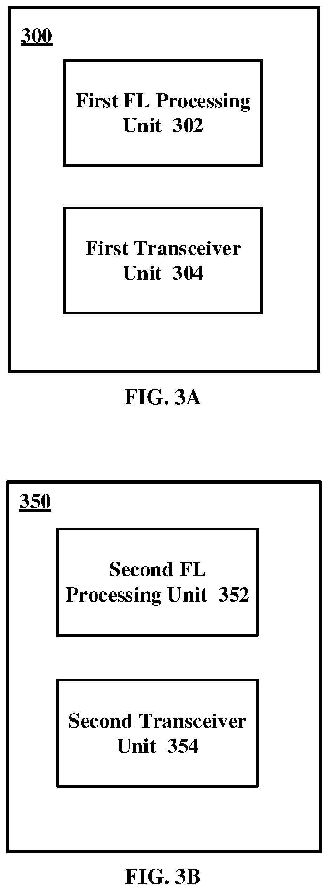

FIG. 3A illustrates an exemplary electronic device for a central processing apparatus, according to an embodiment. The electronic device 300 shown in FIG. 3A can include various units to implement various embodiments according to the present disclosure. The electronic device 300 can include a first FL processing unit 302 and a first transceiver unit 304. In various embodiments, the electronic device 300 can be implemented as the central processing apparatus 211 in FIG. 2 or a portion thereof. The electronic device 300 can be integrated in the central processing apparatus 211 or be provided separately from the central processing apparatus 211 and perform information exchange through an interface or a communication link. The various operations described below in conjunction with the central processing apparatus can be implemented by units 302 and 304 or other potential units of the electronic device 300.

In the present disclosure, the first FL processing unit 302 can be configured to cause a central processing apparatus (e.g., the central processing apparatus 211) to perform federated learning together with one or more distributed computing apparatuses (e.g., the distributed computing apparatus 201). The purpose of the federated learning is to train one or more global models for a particular application or task. In some cases, for a particular application or task, a same global model can be trained by all the distributed computing apparatuses. In other cases, for a particular application or task, a first global model can be trained by a part of the distributed computing apparatuses and a second global model can be trained by another part of the distributed computing apparatuses.

In an embodiment, the first transceiver unit 304 can be configured to cause the central processing apparatus 211 to receive a report message from one or more distributed computing apparatuses 201, and the report message can include a training data set information of the distributed computing apparatus 201. In federated learning, each distributed computing apparatus uses its own training data to train the global model locally, and provides, for example, the training results (i.e., model parameters), to the central processing apparatus without providing training data to the central processing apparatus or other distributed computing apparatuses. However, the distributed computing apparatus can provide descriptive or statistical information about the training data set to the central processing apparatus. Thus, the central processing apparatus can coordinate and control the federated learning based on one or more aspects of the training data set information of each distributed computing apparatus, so as to optimize the overall federated learning effect.

The report message can additionally or alternatively include device information of each distributed computing apparatus 201. The device information can include, for example, at least one of device identification, battery power, processing capability, or location information. Likewise, the central processing apparatus can coordinate and control the federated learning based on one or more aspects of the device information of each distributed computing apparatus, so as to optimize the overall federated learning effect.

In an embodiment, the first FL processing unit 302 can be configured to cause the central processing apparatus 211, for the first distributed computing apparatus 201-1 in the distributed computing apparatuses 201, evaluate its federated learning performance based on the report message of the distributed computing apparatus 201-1. Federated learning performance of a distributed computing apparatus can be measured by the sharing of global model improvements by the distributed computing apparatus in a round of federated learning. For example, it can be considered that a distributed computing apparatus with a larger improvement in the objective function has better federated learning performance. The characteristics of the training data represented by the training data set information and the state of the distributed computing apparatus represented by the device information can, to varying degrees, be related to the role played by the distributed computing apparatus in federated learning. By evaluating the federated learning performance of each distributed computing apparatus, separate operations can be performed for each distributed computing apparatus, so that each distributed computing apparatus can play its own role and while the overall federated learning effect can be optimized.

In an embodiment, the first FL processing unit 302 can also be configured to cause the central processing apparatus 211 to, for the first distributed computing apparatus 201-1 in the distributed computing apparatuses 201, determine its wireless resource requirements based on the federated learning performance of the distributed computing apparatus 201-1. It should be understood that the wireless resource requirements for the distributed computing apparatus 201 that match its federated learning performance can be determined so that the wireless communication performance does not unduly limit the ability for the distributed computing apparatus 201 to perform federated learning (e.g., during reception of the global model or transmission of model update information). The first transceiver unit 304 can be configured to cause the central processing apparatus 211 to notify the wireless network (e.g., the wireless network 251) via a message to configure wireless resources for the distributed computing apparatus 201-1 based on or with reference to its wireless resource requirements. If the wireless network 251 can configure the wireless resources for the distributed computing apparatus 201-1 with reference to the received wireless resource requirements, the wireless communication performance of the distributed computing apparatus 201-1 during the execution of federated learning can be guaranteed.

Alternatively, in an embodiment, the first FL processing unit 302 can be configured to cause the central processing apparatus 211 to, for the first distributed computing apparatus 201-1 in the distributed computing apparatuses 201, determine its wireless resource requirements based on the federated learning performance of the first distributed apparatus 201-1. The first transceiver unit 304 can be configured to cause the central processing apparatus 211 to obtain the wireless communication performance of the first distributed computing apparatus 201-1, and to determine whether the wireless communication performance can satisfy the wireless resource requirements determined for the distributed computing apparatus 201-1. The central processing apparatus 211 can notify the wireless network via a message at any time to configure wireless resources for the distributed computing apparatus 201-1 based on or with reference to the wireless resource requirements. In an embodiment, the central processing apparatus 211 can notify the wireless network to configure the wireless resources for the distributed computing apparatus 201-1 based on or with reference to the wireless resource requirements, as needed (for example, only when the wireless communication performance cannot meet the wireless resource requirements).

Alternatively, in an embodiment, the first transceiver unit 304 can be configured to cause the central processing apparatus 211 to obtain the wireless communication performance of one or more distributed computing apparatuses 201, and select the distributed computing apparatus of which the wireless communication performance satisfies a certain threshold requirement to perform the federated learning, thereby ensuring that the wireless communication performance of the distributed computing apparatuses participating in the federated learning does not limit the federated learning unduly.

FIG. 3B illustrates an exemplary electronic device for a distributed computing apparatus, according to an embodiment. The electronic device 350 shown in FIG. 3B can include various units to implement various embodiments according to the present disclosure. The electronic device 350 can include a second FL processing unit 352 and a second transceiver unit 354. In various embodiments, the electronic device 350 can be implemented as any of the distributed computing apparatuses 201 in FIG. 2 or a portion thereof. The electronic device 350 can be integrated in the distributed computing apparatus 201, or be provided separately from the distributed computing apparatus 201 and exchange information through an interface or a communication link. The various operations described below in connection with the distributed computing apparatus can be implemented by units 352 and 354 or other potential units of electronic device 350.

In the present disclosure, the second FL processing unit 352 can be configured to cause a distributed computing apparatus (e.g., the distributed computing apparatus 201-1) to perform federated learning together with a central processing apparatus (e.g., the central processing apparatus 211) and other distributed computing apparatuses. The purpose of the federated learning is to train one or more global models for a particular application or task. In some cases, for a particular application or task, a single distributed computing apparatus can participate in one or more federated learning groups to train a same global model.

In one embodiment, the second transceiver unit 354 can be configured to cause the distributed computing apparatus 201-1 to send a report message to the central processing apparatus 211. The report message can include training data set information of the distributed computing apparatus 201-1. In federated learning, the distributed computing apparatus 201-1 can provide descriptive or statistical information about the training data set to the central processing apparatus. Thus, the central processing apparatus can coordinate and control the federated learning based on the training data set information of each distributed computing apparatus, so as to optimize the overall federated learning effect.

The report message can additionally or alternatively include device information for each distributed computing apparatus 201. The device information can include, for example, at least one of the device identification, battery power, processing capability, or location information. Likewise, the central processing apparatus can coordinate and control the federated learning based on the device information of each distributed computing apparatus, so as to optimize the overall federated learning effect.

In an embodiment, the second transceiver unit 354 can be configured to cause the distributed computing apparatus 201-1 to receive wireless resource configuration information from the wireless network. The wireless resource configuration information is determined by the wireless network based on or with reference to an indication message from the central processing apparatus. In an embodiment, the indication message from the central processing apparatus can include wireless resource requirement that matches the federated learning performance of the distributed computing apparatus 201-1. The wireless resource configuration information determined based on or with reference to the wireless resource requirements can allow the wireless communication performance of the distributed computing apparatus 201-1 to not unduly limit its ability to perform the federated learning (e.g., during reception of a global model or transmission of model update information).

In some embodiments, the electronic devices 300 and 350 can be implemented at the chip level, or can be implemented at the device level by including other external components. For example, each electronic device can work as a whole machine as a communication device.

It should be understood that the foregoing various units are only logical modules divided based on logical functions to be implemented by the units, and are not intended to limit specific implementations, for example, the units may be implemented by software, hardware, or a combination of software and hardware. In actual implementation, the above various units may be implemented as independent physical entities, or may be implemented by a single entity (for example, a processor (CPU, DSP, or the like), or an integrated circuit). The processing circuitry may refer to various implementations of a digital circuitry, an analog circuitry, or a mixed signal (combination of analog and digital) circuitry that perform functions in a computing system. The processing circuitry can include, for example, a circuit such as an integrated circuit (IC), an application specific integrated circuit (ASIC), a portion or circuit of a separate processor core, the entire processor core, a separate processor, a programmable hardware device such as a field programmable gate array (FPGA), and/or a system including multiple processors.

Exemplary electronic devices and operations performed according to embodiments are briefly described above with reference to FIGS. 3A and 3B. Details of these operations are described further below.

### [Federated Learning Performance Evaluation]

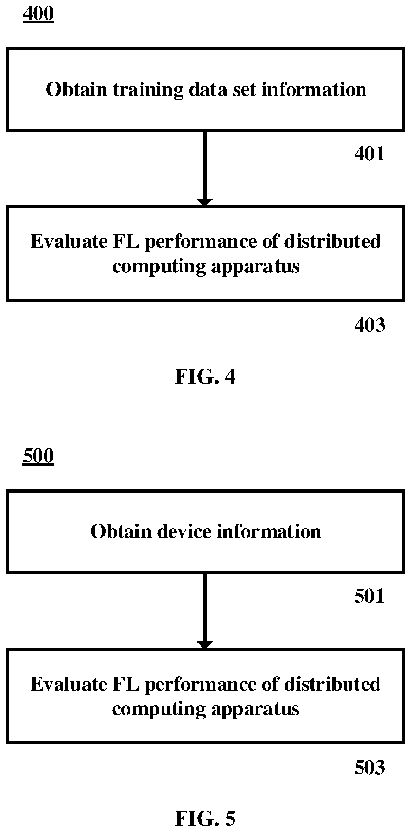

FIG. 4 illustrates an exemplary process for evaluating federated learning performance of a distributed computing apparatus according to an embodiment of the present disclosure. This exemplary process can be performed by a central processing apparatus, such as the central processing apparatus 211 in FIG. 2.

As shown in FIG. 4, an exemplary process 400 can include obtaining the training data set information of one or more distributed computing apparatuses (401). An example of a distributed computing apparatus is the distributed computing apparatus 201 in FIG. 2, which can be a control apparatus for an autonomous vehicle. The distributed computing apparatus 210 can be an electronic apparatus integrated in the vehicle (e.g., a console), or can be an electronic apparatus (e.g., a mobile phone, a tablet device, etc.) that is temporarily placed in the vehicle by the vehicle user. In an embodiment, the training data set information can include at least one of the attribute information, data amount, data freshness, or data diversity of the training data. Each distributed computing apparatus can keep its own training data locally, and report the training data set information to the central processing apparatus.

Specifically, the data amount can describe the number of data samples in the training data set. For example, for the training data set **D={x1, x2, ..., xm},** the number of data samples is m. The attribute information can describe whether the training data has attributes useful for the federated learning, the total number of the attributes, and/or the total number of the useful attributes. The attribute information can be used to describe one or more features of a user, or a product. A d-dimensional data sample **xᵢ=(xᵢ₁; xᵢ₂; ...; x_{id})** can use d attributes to describe features. For the global model to be trained, all or only some of the d attributes can be valid. For example, in an automatic driving application, a data sample could be (driving age; brand; model; displacement; color). The data sample includes five attributes of the driving age, brand, model, displacement and color, that is, the automatic driving information is described from the five dimensions of the driving age, vehicle brand, model, displacement, and color. However, it can be considered that the color attribute is not critical in automatic driving applications, so there are 4 valid attributes or dimensions for this data sample.

The data samples in the training data set can be accumulated and generated by the user during the use of a particular application or service. The data freshness of the training data can describe how recently the training data was generated. For example, a user can have used an application or service over the past six months and accumulated data samples. Based on the specific application fields of the model, for example, the data samples in the last month can be of great value for the model training, and the ratio of the number of data samples in the last month to the total number of data samples can be used to represent the freshness of the training data. Of course, the freshness of the training data can also be represented by the total amount of data samples in the last month or a certain period of time.

The data samples in the training data set can be accumulated and generated by users in different usage scenarios. The data diversity of the training data can describe the extent to which the training data is diverse in one or more attributes. For example, a data sample can include a geographic location attribute. In some scenarios, it can be advantageous to train a global model with geographically dispersed data samples. The reason can be that data samples corresponding to dispersed geographic locations are more meaningful for the federated learning application. For example, for atmospheric detection, data samples collected by geographically dispersed distributed computing apparatuses can be used to reflect atmospheric information on a larger geographic scale. In other scenarios, data samples within a geographic location set can be desirable. The reason can be that data samples corresponding to centralized geographic locations are more meaningful for the federated learning application. For example, for online shopping, a business that mainly serves a certain business district can pay more attention to the shopping information of users in the business district and geographical locations nearby. Therefore, the sample data of shopping by users in the business district and geographical locations nearby are more meaningful. Based on the above understanding, those skilled in the art can use any suitable measure to describe the data diversity, including but not limited to the variance, the degree of dispersion or the degree of aggregation for geographic locations, and the like.

The exemplary process 400 further includes evaluating the federated learning performance of the distributed computing apparatus based on one or more aspects of the training data set information (403). In federated learning, data is the basis for the global model training and adjustment of global model parameters. In an embodiment of the present disclosure, the characteristics of the training data set of the distributed computing apparatus are associated with the federated learning performance of the distributed computing apparatus. The easier the training data set is to achieve the goal of federated learning, the better the federated learning performance of the distributed computing apparatus. Accordingly, in an embodiment, evaluating the federated learning performance of the distributed computing apparatus can include any combination of one or more of the following. For a specific distributed computing apparatus 201, the more the effective dimensions in the attribute information of the distributed computing apparatus, the better the FL performance of the distributed computing apparatus. The greater the amount of data of the distributed computing apparatus, the better the FL performance of the distributed computing apparatus. The fresher the data of the distributed computing apparatus, the better the FL performance of the distributed computing apparatus. And/or the more diverse the data of the distributed computing apparatus, the better the FL performance of the distributed computing apparatus.

It should be understood that the above federated learning performance evaluation methods are exemplary. For different applications or tasks, the characteristics of training data sets that are easy to achieve the goal of federated learning can be different or even opposite.

FIG. 5 illustrates another exemplary process for evaluating federated learning performance of a distributed computing apparatus according to an embodiment of the present disclosure. This exemplary process can be performed by a central processing apparatus, such as the central processing apparatus 211 in FIG. 2.

As shown in FIG. 5, the exemplary process 500 includes obtaining device information of one or more distributed computing apparatuses. An example of a distributed computing apparatus is the distributed computing apparatus 201 in FIG. 2. Likewise, the distributed computing apparatus 210 can be an electronic apparatus (e.g., a console) integrated in the vehicle, or can be an electronic apparatus (e.g., a mobile phone, tablet device, etc.) temporarily placed in the vehicle by the vehicle user. In an embodiment, the device information can include at least one of the device identification, battery power, processing capability, or location information of the distributed computing apparatus. Each distributed computing apparatus can report its own device information to the central processing apparatus.

Specifically, the device identification can include at least one of an International Mobile Subscriber Identity (IMSI), a Temporary Mobile Subscriber Identity (TMSI), or an IP address of the distributed computing apparatus. The battery power information can include at least one of the battery capacity of the distributed computing apparatus, the remaining power percentage, whether it is powered on/on charge, or the like. The processing capability information can include at least one of the model of the processor/cache of the distributed computing apparatus, the current load of the processor/cache, and the like.

The exemplary process 500 also includes evaluating the federated learning performance of the distributed computing apparatus based on one or more aspects of the device information. In federated learning, it depends on its own performance for the distributed computing apparatus to train the global model, and differences in the performance of the distributed computing apparatus can lead to different performances of the federated learning. The better the performance of the distributed computing apparatus is, the easier it is for the distributed computing apparatus to achieve the goal of federated learning, and the better the federated learning performance is. Accordingly, in an embodiment, evaluating the federated learning performance of the distributed computing apparatus can include any combination of one or more of the following. For a particular distributed computing apparatus 201, the higher the battery power of the distributed computing apparatus, the better the federated learning performance of the distributed computing apparatus. And/or, the higher the processing capability of the distributed computing apparatus, the better the federated learning performance of the distributed computing apparatus.

### [Evaluation of Wireless Communication Requirements, Evaluation of Wireless Communication Performance]

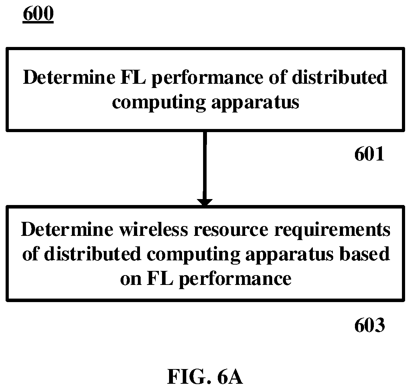

FIG. 6A illustrates an exemplary process for determining wireless resource requirements of a distributed computing apparatus in accordance with an embodiment of the present disclosure. This exemplary process can be performed by a central processing apparatus, such as the central processing apparatus 211 in FIG. 2.

As shown in FIG. 6A, the exemplary process 600 includes, at 601, determining the federated learning performance of a distributed computing apparatus (e.g., the distributed computing apparatus 201), e.g., using the methods described with reference to FIGS. 4 and 5.

The exemplary process 600 further includes, at 603, determining wireless resource requirements of the distributed computing apparatus based on the federated learning performance. It should be understood that the better the federated learning performance of the distributed computing apparatus is, the greater its contribution to the federated learning can be. Therefore, in the case of limited wireless resources, priority should be given to ensuring the wireless communication performance of such distributed computing apparatus so that it can successfully report its model update information. Accordingly, in the embodiment, for a particular distributed computing apparatus 201, determining the wireless resource requirements can include at least one of the following: the better the federated learning performance of the distributed computing apparatus 201 is, the higher the wireless resource requirements are determined for the distributed computing apparatus 201; or there is a threshold for the wireless resource requirements, and the wireless resource requirements meeting the threshold are determined for the distributed computing apparatus 201 whose federated learning performance meets some requirement.

The wireless resource requirements can specify at least one of the uplink or downlink transmission power and/or the uplink or downlink time-frequency resources of the distributed computing apparatus. Sufficient uplink transmission power and uplink transmission time-frequency resources are beneficial for the distributed computing apparatus to send the model update information. Sufficient downlink transmission power and downlink time-frequency resources are beneficial for the distributed computing apparatus to receive the global model (initial or updated).

In some embodiments, when the wireless resource requirements of the distributed computing apparatus are determined, the central processing apparatus can notify the wireless network of the wireless resource requirements via a message, so that the wireless network can configure wireless resources for corresponding distributed computing apparatus based on or with reference to the wireless resource requirements. By configuring the wireless resources as determined based on or with reference to the wireless resource requirements, the distributed computing apparatus 201 is enabled to more reliably receive the global model or send the model update information, that is, the wireless communication performance will not unduly limit the performance of the federated learning by the distributed computing apparatus 201.

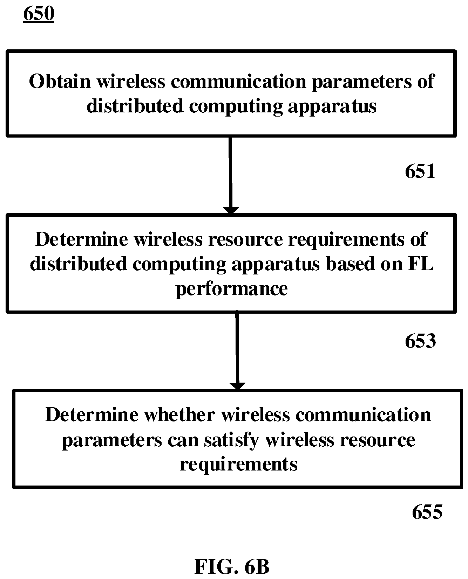

FIG. 6B illustrates another exemplary process for determining wireless resource requirements of a distributed computing apparatus, according to an embodiment of the present disclosure. This exemplary process can be performed by a central processing apparatus, such as the central processing apparatus 211 in FIG. 2.

As shown in FIG. 6B, the exemplary process 650 includes, at 651, obtaining wireless communication parameters of a distributed computing apparatus (e.g., the distributed computing apparatus 201). The wireless communication parameters can include, but are not limited to, the uplink or downlink transmission power, and/or the uplink or downlink time-frequency resources.

The exemplary process 650 further includes, at 653, determining wireless resource requirements of the distributed computing apparatus based on federated learning performance. The operation at 653 can be understood with reference to the operation at 603 in FIG. 6A. Likewise, in an embodiment, for a particular distributed computing apparatus 201, determining the wireless resource requirements can include at least one of the following: the better the federated learning performance of the distributed computing apparatus 201 is, the higher the wireless resource requirements are determined for the distributed computing apparatus 201; or there is a threshold for the wireless resource requirements, and the wireless resource requirements meeting the threshold are determined for the distributed computing apparatus 201 whose federated learning performance meets some requirement.

The exemplary process 650 further includes, at 655, comparing the obtained wireless communication parameters with the determined wireless resource requirements to determine whether the current wireless communication parameters of the distributed computing apparatus can satisfy wireless resource requirements that match the federated learning performance.

In some embodiments, in the case where the current wireless communication parameters can meet the wireless resource requirements, it can be considered that the wireless communication performance will not unduly limit the performance of the distributed computing apparatus to perform the federated learning. In the case where the current wireless communication parameters cannot meet the wireless resource requirements, the central processing apparatus can notify the wireless network of the wireless resource requirements via a message, so that the wireless network can reconfigure wireless resources for corresponding distributed computing apparatus based on or with reference to the wireless resource requirements. By configuring the wireless resources as determined based on or with reference to the wireless resource requirements, the distributed computing apparatus 201 is enabled to more reliably receive the global model or send the model update information, that is, the wireless communication performance will not unduly limit the performance of the distributed computing apparatus 201 to perform the federated learning.

Of course, in some embodiments, when the wireless communication parameters of the distributed computing apparatus are obtained, the central processing apparatus can use the wireless communication parameters as a criterion for selecting distributed computing apparatuses to participate in the federated learning system. That is, only the distributed computing apparatuses whose wireless communication parameters (e.g., the uplink measurement values) are higher than some thresholds are selected to perform the federated learning. It should be understood that the inventive idea of the present disclosure lies at least in considering the wireless communication performance of the distributed computing apparatuses in the federated learning. The above exemplary processes are just concrete embodiments of the above-mentioned creative idea, and any other implementation that does not deviate from the idea should fall within the scope of the present disclosure.

### [Information Transfer Flow Diagram]

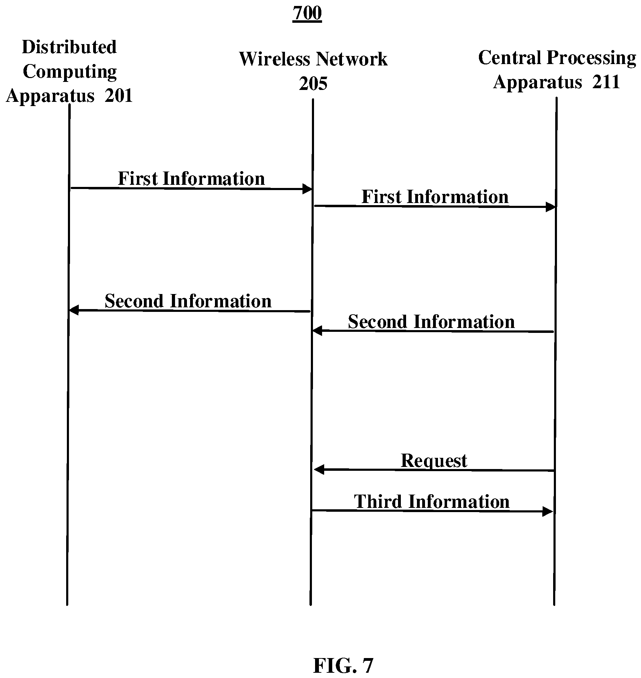

FIG. 7 illustrates an exemplary flow of information transfer between a distributed computing apparatus and a central processing apparatus, according to an embodiment of the present disclosure.

As shown in FIG. 7, taking the distributed computing apparatus 201 and the central processing apparatus 211 as the example, some embodiments of the present disclosure involve sending a first information from the distributed computing apparatus 201 to the central processing apparatus 211 via the wireless network 251. An example of the first information can be a report message, which can include any combination of the training data set information and/or the device information. As mentioned above, examples of the training data set information include the attribute information, data amount, data freshness, or data diversity of the training data; examples of the device information include the device identification, battery power, processing capability, or location information, etc.

Alternatively or additionally, an example of the first information can be the wireless network performance information known to the distributed computing apparatus. Examples of the wireless network performance information include the downlink quality measured by the distributed computing apparatus, the uplink/downlink wireless resource allocation, and the like.

Alternatively or additionally, an example of the first information can be the model update information obtained by the distributed computing apparatus through the federated learning.

As shown in FIG. 7, alternatively or additionally, some embodiments of the present disclosure involve sending a second information from the central processing apparatus 211 to the distributed computing apparatus 201 via the wireless network 251. Examples of the second information can be a global model to be trained through the federated learning, or a global model updated based on the model update information or just the update information of the global model.

As shown in FIG. 7, alternatively or additionally, some embodiments of the present disclosure involve the central processing apparatus 211 requesting a third information on the distributed computing apparatus 201 from the wireless network 251, and the central processing apparatus 211 receiving the third information from the wireless network 251. Examples of the third information can be the wireless resource configuration information of the distributed computing apparatus, the device information of the distributed computing apparatus known to the wireless network, and the like. As previously mentioned, examples of the device information include the device identification, battery power, processing capability, location information, or the like. The wireless resource configuration information can include the uplink and downlink quality, the uplink and downlink resource allocation of the distributed computing apparatus, and the like. The uplink and downlink quality includes, but is not limited to, the Reference Signal Receiving Power (RSRP), the Reference Signal Receiving Quality (RSRQ), or the Signal to Noise Ratio (SNR). The resource allocation includes, but is not limited to, information such as the frequency bandwidth, time slot, or periodicity of resources allocated by the distributed computing apparatus.

In various embodiments of the present disclosure, it can involve transfer of some or all of the above information between the distributed computing apparatus and the central processing apparatus. It should be understood that the exemplary flow of information transfer in FIG. 7 does not exclude that other information is further transferred between the distributed computing apparatus and the central processing apparatus, which is not specifically limited in the present disclosure.

### [Exemplary Process of Federated Learning]

In an embodiment of the present disclosure, the central processing apparatus can select distributed computing apparatuses to participate in the federated learning based on the federated learning performance or information related to the federated learning performance. Generally, the selected distributed computing apparatuses are a plurality of distributed computing apparatuses whose federated learning performance rank higher or whose federated learning performance are higher than a certain threshold. Information related to the federated learning performance can include one or more aspects of the training data set information or the device information, as previously described. Generally, it can be assumed that the local data of the selected multiple distributed computing apparatuses can still satisfy the characteristics of independent and identical distribution. Therefore, the selection made can improve the overall effect of the federated learning without affecting the training of the global model through the federated learning. The exemplary process of selecting the distributed computing apparatuses participating in the federated learning based on information related to federated learning performance is described below.

In an embodiment, the central processing apparatus can query the uplink and/or downlink quality of one or more distributed computing apparatuses through corresponding device identification information (e.g., from a wireless network). At initial of or during the federated learning, the central processing apparatus can select a distributed computing apparatus whose uplink and/or downlink quality meets a predetermined threshold from one or more distributed computing apparatuses to participate in the federated learning.

In an embodiment, the central processing apparatus can query the geographic location information of one or more distributed computing apparatuses through corresponding device identification information (e.g., from a wireless network), or can obtain the geographic location information from the device information. At initial of or during the federated learning, the central processing apparatus can select distributed computing apparatuses with diverse locations or with relatively concentrated locations from one or more distributed computing apparatuses to participate in the federated learning. In an embodiment, for a particular application or task, the same global model or parameters can be set for a plurality of distributed computing apparatuses located near the same geographic location, and the global models or parameters set for the distributed computing apparatuses located at different geographic locations can be slightly different.

In an embodiment, the central processing apparatus can query the battery power or processing capability of one or more distributed computing apparatuses through corresponding device identification information (e.g., from a wireless network), or can obtain the battery power or processing capability from the device information. At initial of or during the federated learning, the central processing apparatus can select one or more distributed computing apparatuses whose battery power or processing capability meets a threshold to participate in the federated learning.

In an embodiment, the central processing apparatus can obtain at least one of corresponding attribute information, data amount, data freshness, or data diversity from the training data set information of the distributed computing apparatus. At initial of or during the federated learning, the central processing apparatus can select a distributed computing apparatus with diverse data from one or more distributed computing apparatuses to participate in the federated learning. Additionally or alternatively, the central processing apparatus can select a distributed computing apparatus with more effective dimensions in the attribute information from one or more distributed computing apparatuses to participate in the federated learning. Additionally or alternatively, the central processing apparatus can select a distributed computing apparatus with greater amount of data from one or more distributed computing apparatuses to participate in the federated learning. Additionally or alternatively, the central processing apparatus can select a distributed computing apparatus with higher data freshness from one or more distributed computing apparatuses to participate in the federated learning.

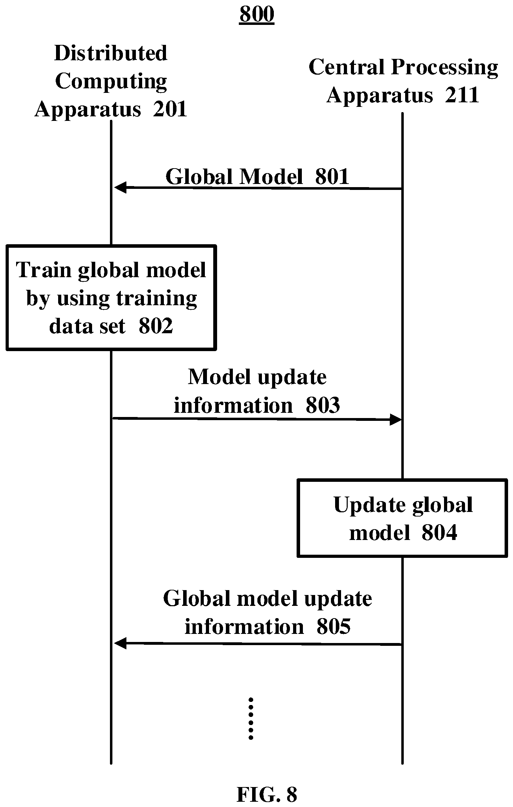

FIG. 8 illustrates an exemplary process for the federated learning according to an embodiment of the present disclosure. This exemplary process can be performed by the central processing apparatus 211 and the distributed computing apparatus 201.

As shown in FIG. 8, the exemplary process 800 includes, at 801, the central processing apparatus 211 sending a global model for a particular application or task to one or more distributed computing apparatuses 201 via a wireless network. At 801, the central processing apparatus 211 can further send encryption information (e.g., a public key) to the plurality of distributed computing apparatuses 201 for subsequent encrypted communications between the distributed computing apparatuses and between the distributed computing apparatuses and the central processing apparatus.

The exemplary process 800 includes, at 802, the distributed computing apparatus 201 training the global model received from the central processing apparatus by using the local training data set, to obtain model update information (i.e., the federated learning results). Federated learning can be performed using various machine learning algorithms, including but not limited to neural networks, random forest algorithms. By local training, the distributed computing apparatus 201 can obtain an updated global model. The update of the global model reflects the improvement to the global model by the distributed computing apparatus 201 based on the local training data set, for example, the adjustment of the parameters of the global model. The exemplary process 800 includes, at 803, the distributed computing apparatus 201 sending the locally determined model update information to the central processing apparatus 211 via the wireless network. The locally determined model update information can be the updated global model per se, or can be just the adjusted global model parameters.

The exemplary process 800 includes, at 804, the central processing apparatus 211 aggregating the model update information received from a plurality of distributed computing apparatuses, to update the global model. The central processing apparatus 211 may need to decrypt the model update information of a plurality of distributed computing apparatuses as a whole with the previously distributed encryption information. In an embodiment, the federated learning results of the distributed computing apparatuses 201 are aggregated with corresponding weights based on their federated learning performance, thereby obtaining a global model. As a result, the distributed computing apparatus with higher federated learning performance can favorably affect the global model update to a greater extent, for example, the goal of training the global model can be achieved as soon as possible for a particular application or task. The exemplary process 800 includes, at 805, the central processing apparatus 211 sending the global model update information to one or more distributed computing apparatuses 201 via a wireless network. The global model update information can be the aggregated global model per se, or it can be just the adjusted global model parameters.

The exemplary process 800 can further include a new round of federated learning and federated learning results reporting similar to operations at 802 and 803, that is, the distributed computing apparatus 201 trains the updated global model received from the central processing apparatus by using the local training data set, obtaining another federated learning result and report to the central processing apparatus. Next, the exemplary process 800 further includes a new round of federated learning results aggregation and the global model distribution similar to operations at 804 and 805. The above process can be repeated until the goal of training the global model is achieved for a particular application or task.

In some embodiments, for a particular application or task, in order to make a distributed processing apparatus with higher federated learning performance play more roles in the federated learning, more federated learning opportunities can be allocated to such a distributed processing apparatus. For example, compared with other distributed processing apparatuses, the distributed processing apparatus with higher federated learning performance can participate in the global model update more times.

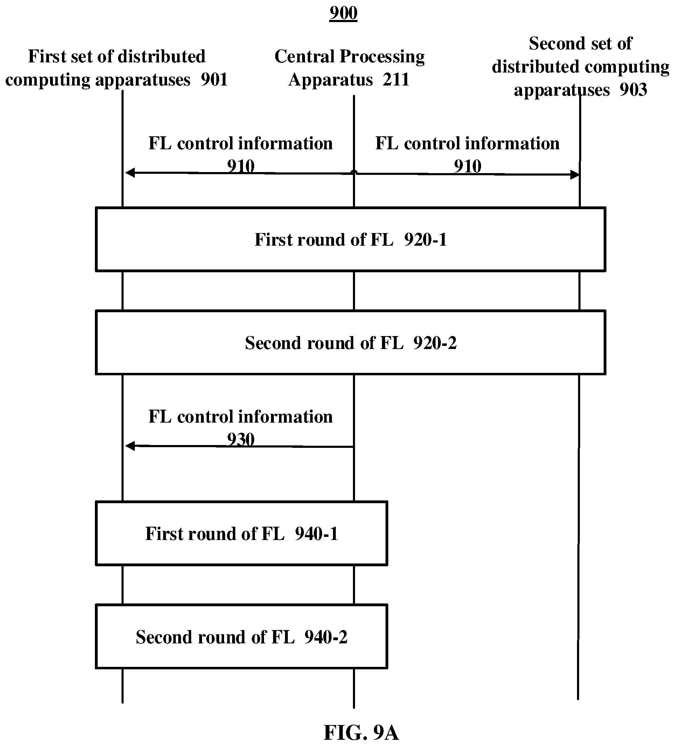

FIG. 9A illustrates a schematic diagram of differentiated federated learning opportunities according to embodiments of the present disclosure. In FIG. 9A, the central processing apparatus 211 can perform the federated learning with a first set of distributed computing apparatuses 901 and a second set of distributed computing apparatuses 903. In an embodiment, the first set of distributed computing apparatus 901 can include a plurality of distributed computing apparatuses whose federated learning performance is higher than a first threshold level as members of the set, and the second set of distributed computing apparatus 903 can include a plurality of distributed computing apparatuses whose federated learning performance is higher than a second threshold level and lower than the first threshold level as members of the set, where the first threshold level is higher than the second threshold level. Therefore, the federated learning performance of the members of the first set of distributed computing apparatus 901 is higher than the federated learning performance of the members of the second set of distributed computing apparatus 903.

In FIG. 9A, in order to make the first set of distributed computing apparatuses 901 have more federated learning opportunities to give full play to the federated learning performance, the central processing apparatus 211 can be configured to divide multiple sets of distributed computing apparatuses into groups. In an embodiment, the central processing apparatus 211 can be configured to divide the distributed computing apparatuses in sets 901 and 903 into a first federated learning group, and to divide the distributed computing apparatuses in the set 901 into a second federated learning group. The first federated learning group and the second federated learning group train the same global model under the control and coordination of the central processing apparatus 211.

In FIG. 9A, the central processing apparatus 211 can control the first federated learning group to first train an initial global model, and obtain an updated global model. Then, the central processing apparatus 211 can control the second federated learning group alone to train the updated global model. Specifically, as shown in FIG. 9A, the central processing apparatus 211 can, at 910, send the federated learning control information to the first federated learning group (i.e., the distributed computing apparatuses in the first set of distributed computing apparatus 901 and the second set of distributed computing apparatus 903), including the initial global model (or additional encryption information). At 920-1, the distributed computing apparatuses in the first set of distributed computing apparatuses 901 and the second set of distributed computing apparatuses 903 can perform a first round of federated learning, and the central processing apparatus 211 can aggregate the results of the first round of federated learning and update the global model. The specific operation at 920-1 can be understood with reference to FIG. 8, and will not be described in detail here. Then, the first set of distributed computing apparatuses 901, the second set of distributed computing apparatuses 903, and the central processing apparatus 211 can similarly perform a second round of federated learning at 920-2 and more rounds of federated learning, until the goal of training the global model is achieved for a particular application or task.

After the first federated learning group completes the federated learning, the central processing apparatus 211 can control the second federated learning group to perform the federated learning. As shown in FIG. 9A, the central processing apparatus 211 can, at 930, send the federated learning control information to the second federated learning group (i.e., the distributed computing apparatuses in the first set of distributed computing apparatuses 901), including the global model updated by the first federated learning group (or additional encryption information). At 940-1, the distributed computing apparatuses in the first set of distributed computing apparatuses 901 can perform the first round of federated learning, and the central processing apparatus 211 can aggregate the results of the first round of federated learning and update the global model. The specific operation at 940-1 can be understood with reference to FIG. 8, and will not be described in detail here. Then, the first set of distributed computing apparatuses 901 and the central processing apparatus 211 can similarly perform a second round of federated learning and more rounds of federated learning at 940-2 until the goal of training the global model is achieved for the particular application or task.

In the federated learning in FIG. 9A, the distributed computing apparatuses with higher federated learning performance in the set 901 train the global model in the federated learning of the two groups, which can take advantages of the better federated learning performance of these distributed computing apparatuses. In addition, since the global model is trained by federated learning of two groups, a lower learning goal can be determined for the federated learning of the first group, and a higher learning goal can be achieved by the federated learning of the second group. Through the flexible setting of learning goals, the proportion of each federated learning group or each set of distributed computing apparatuses participating in the federated learning can be controlled.

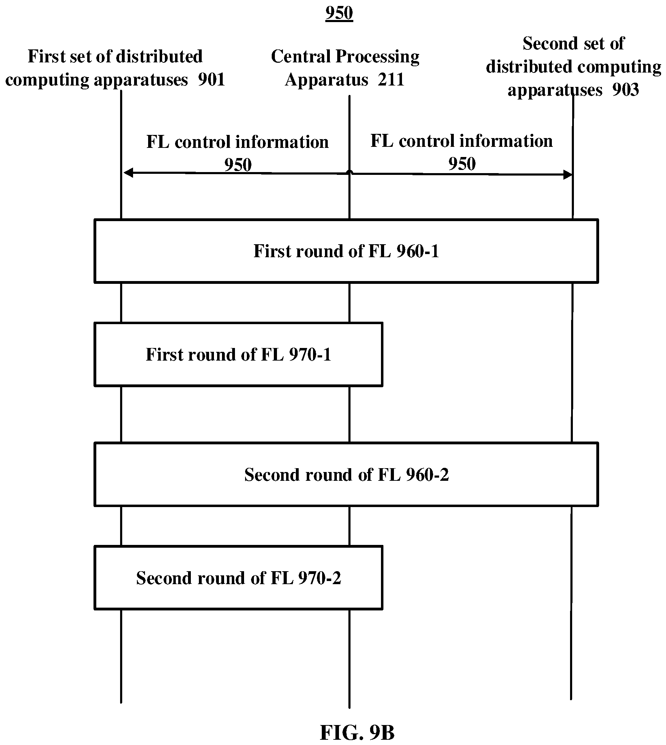

In FIG. 9A, the federated learning of the first federated learning group and the second federated learning group can be considered to be performed in serial. FIG. 9B illustrates another schematic diagram of differentiated federated learning opportunities according to embodiments of the present disclosure.

In FIG. 9B, the central processing apparatus 211 can perform the federated learning with the first set of distributed computing apparatuses 901 and the second set of distributed computing apparatuses 903. Similar to FIG. 9A, the first set of distributed computing apparatus 901 can include a plurality of distributed computing apparatuses whose federated learning performance is higher than a first threshold level as members of the set, and the second set of distributed computing apparatus 903 can include a plurality of distributed computing apparatuses whose federated learning performance is higher than a second threshold level and lower than the first threshold level as members of the set, where the first threshold level is higher than the second threshold level. Therefore, the federated learning performance of the members of the first set of distributed computing apparatus 901 is higher than the federated learning performance of the members of the second set of distributed computing apparatus 903.

In FIG. 9B, in order to make the first set of distributed computing apparatuses 901 have more federated learning opportunities to give full play to the federated learning performance, the central processing apparatus 211 can be configured to divide the distributed computing apparatuses in the sets 901 and 903 into a first federated learning group, and to divide the distributed computing apparatuses in the set 901 into a second federated learning group. The first federated learning group and the second federated learning group train the same global model under the control and coordination of the central processing apparatus 211.

In FIG. 9B, the central processing apparatus 211 can control the first federated learning group and the second federated learning group to train the global model in parallel, thereby obtaining an updated global model. In parallel training, the federated learning is performed by the first group and the second group by turns. Specifically, as shown in FIG. 9B, the central processing apparatus 211 can, at 950, send federated learning control information to the first federated learning group (i.e., the distributed computing apparatuses in the first set of distributed computing apparatuses 901 and the second set of distributed computing apparatuses 903) and the second federated learning group (i.e., the distributed computing apparatuses in the first set of distributed computing apparatuses 901). In an embodiment, the control message sent to the first federated learning group includes the initial global model (or additional first encryption information), and the control message sent to the second federated learning group also includes the initial global model (or additional second encryption information, or just the second encryption information). That is, the distributed computing apparatuses in the first set of distributed computing apparatuses 901 will receive two pieces of encryption information, which are respectively used for federated learning of different groups. At 960-1, the central processing apparatus 211 can control the distributed computing apparatuses in the first set of distributed computing apparatuses 901 and the second set of distributed computing apparatuses 903 to perform the first round of federated learning of the first group, and the central processing apparatus 211 can aggregate results of the first round of federated learning of the first group and update the global model. Here, when encryption is required, the members of the first federated learning group encrypt the model update information sent to the central processing apparatus 211 with the first encryption information. The specific operation at 960-1 can be understood in conjunction with FIG. 8, the difference is that the central processing apparatus 211 can send the updated global model just to the second federated learning group, so that the second federated learning group can continue with the training based on the updated global model.

After the first round of federated learning of the first group, the central processing unit 211 can control the second federated learning group to perform the first round of federated learning of the second group. At 970-1, the distributed computing apparatuses in the first set of distributed computing apparatuses 901 can perform the first round of federated learning of the second group, and the central processing apparatus 211 can aggregate the results of the first round of federated learning of the second group and update the global model. Here, when encryption is required, the members of the second federated learning group encrypt the model update information sent to the central processing apparatus 211 with the second encryption information. The specific operation at 970-1 can be understood with reference to FIG. 8, the difference is that, in addition to the distributed computing apparatuses in the first set of distributed computing apparatuses 901, the central processing apparatus 211 also needs to send the updated global model to the distributed computing apparatuses in the second set of distributed computing apparatuses 903, that is, to all members of the first federated learning group, so that the first federated learning group can continue with the next round of training based on the updated global model.

Then, the first set of distributed computing apparatuses 901, the second set of distributed computing apparatuses 903, and the central processing apparatus 211 can similarly perform the second round of federated learning of the first group and the second group at 960-2 and 970-2, and perform more rounds of federated learning of each group until the goal of training the global model is achieved for a specific application or task.

In the federated learning of FIG. 9B, the distributed computing apparatuses in the set 901 with higher federated learning performance will train the global model in the federated learning of the two groups, which can take advantages of the better federated learning performance of these distributed computing apparatuses. In the example of parallel training of FIG. 9B, the federated learning of the first group and the second group can be performed not strictly by turns. For example, each time the updated global model is distributed, the central processing apparatus 211 can additionally send the first encryption information or the second encryption information to notify corresponding distributed computing apparatuses to perform the federated learning. Accordingly, the model update information sent by the distributed computing apparatus to the central processing apparatus 211 needs to be encrypted with the first or second encryption information. Through the flexible setting of the number of participants in the federated learning, the proportion of each federated learning group or each set of distributed computing apparatuses participating in the federated learning can be controlled.

In the embodiments of differentiated federated learning opportunities illustrated in FIGS. 9A and 9B, wireless resource requirements accommodating to the federated learning opportunities can be determined for the distributed computing apparatuses. For example, more uplink/downlink time-frequency resources for communication with the central processing apparatus can be configured for distributed computing apparatuses with more participation in the federated learning; higher uplink/downlink power level for ensuring stability of the communication with the central processing apparatus can be configured for distributed computing apparatuses with more participation in the federated learning. In an embodiment, the central processing apparatus can notify the wireless network, via a message, to configure wireless resources for corresponding distributed computing apparatuses based on the wireless resource requirements.

In the examples of FIGS. 9A and 9B, the distributed computing apparatuses are grouped based on the federated learning performance. Since the federated learning performance can be related to one or more aspects of the training data set information or the device information, these examples can cover a variety of scenarios. For example, in an embodiment, the distributed computing apparatuses can be grouped based on at least one of the battery power, processing capability, effective dimensions of attribute information, data amount, data freshness, or data diversity.

The division of the distributed processing apparatuses into groups to train the same global model was described above with reference to FIGS. 9A and 9B. In some cases, the distributed processing apparatuses can be divided into groups to train multiple different global models for a particular application or task. For example, the central processing apparatus can divide the distributed computing apparatuses into groups based on location diversity or relative concentration of locations of the distributed computing apparatuses. In an embodiment, there is interest in weather information for one or more specific locations. The central processing apparatus can group a plurality of distributed computing apparatuses concentrated near a particular location to train a global model. In this way, different positions can correspond to different federated learning groups. In this embodiment, although the federated learning is performed for the same application or task, the global models corresponding to different locations can be different, e.g., can have different model parameters.

### [Federated Learning with Supervision]

After the end of federated learning, the central processing apparatus will send the updated global model to each distributed computing apparatus. Then, for the input data, the distributed computing apparatus applies the updated global model to the input data to obtain an output result (which can also be referred to as a labelled result for the input data).

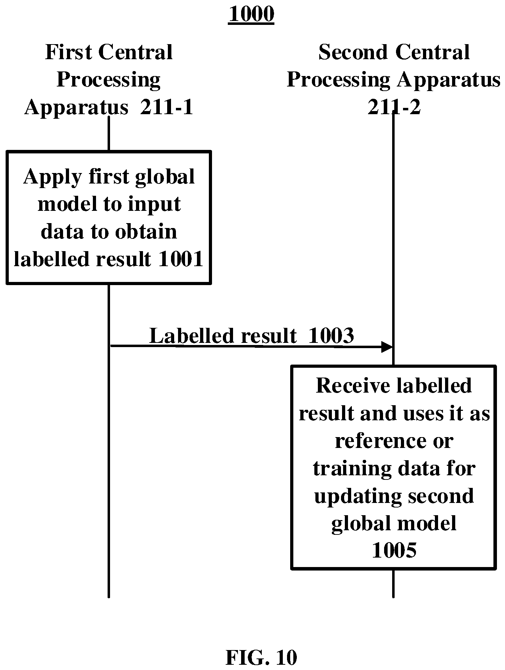

In a specific implementation, there can be multiple federated learning systems that use different global models, and each system can correspond to a central processing apparatus and multiple distributed computing apparatuses that use a same global model. Taking the automatic driving application as an example, each autonomous vehicle manufacturer or platform can use the same global model with multiple autonomous vehicles it manufactures or registers. Different autonomous vehicle manufacturers or platforms can form multiple federated learning systems with corresponding autonomous vehicles. For driving safety concern, it is desired that all autonomous vehicles perform the same driving action under the same road condition. However, due to differences in global models used by different manufacturers or platforms (including but not limited to differences in algorithm parameters or model parameters), different global models are likely to produce different control outputs (i.e., labelled results) for the same input data (such as road conditions). In order to reduce the output differences of different global models for the same input data, it can be conceived to supervise the output results between different central processing apparatuses or between different distributed computing apparatuses, so that different federated learning systems can hide their global models and parameters while rendering the output results converged. Exemplary process of supervision among multiple federated learning systems is described below in conjunction with FIGS. 10 to 12.

In the example of FIG. 10, the first central processing apparatus 211-1 and the second central processing apparatus 211-2 belong to separate federated learning systems, and the two federated learning systems use a first global model and a second global model which are different. At 1001, the first central processing apparatus 211-1 applies the first global model to the input data to obtain a labelled result. The input data can be obtained by the first central processing apparatus 211-1 in any suitable manner. At 1003, the first central processing apparatus 211-1 provides the labelled result to the second central processing apparatus 211-2. At 1005, the second central processing apparatus 211-2 receives the labelled result and uses it as the reference or training data for updating the second global model in the same scenario. The above operations can be repeated at a certain period. As a result, after performance of the above operations for a period of time, although the first global model and the second global model can be different, their labelled results for the same input data will converge. As desired, the second central processing apparatus 211-2 can similarly provide its own labelled results to the first central processing apparatus 211-1 as the reference for it to update the first global model.

In the example of automatic driving, each of the first central processing apparatus 211-1 and the second central processing apparatus 211-2 can be, for example, a background server, or an equipment installed on the road site, for example, the equipment is integrated in the traffic light. The first central processing apparatus 211-1 can obtain real-time road condition information from a monitoring equipment installed near the road, and apply its own first global model to the road condition information to obtain a labelled result representing a corresponding automatic driving operation. The first central processing apparatus 211-1 can provide the labelled result to the second central processing apparatus 211-2, so that the second central processing apparatus 211-2 can use the labelled result as a reference for updating its own second global model.

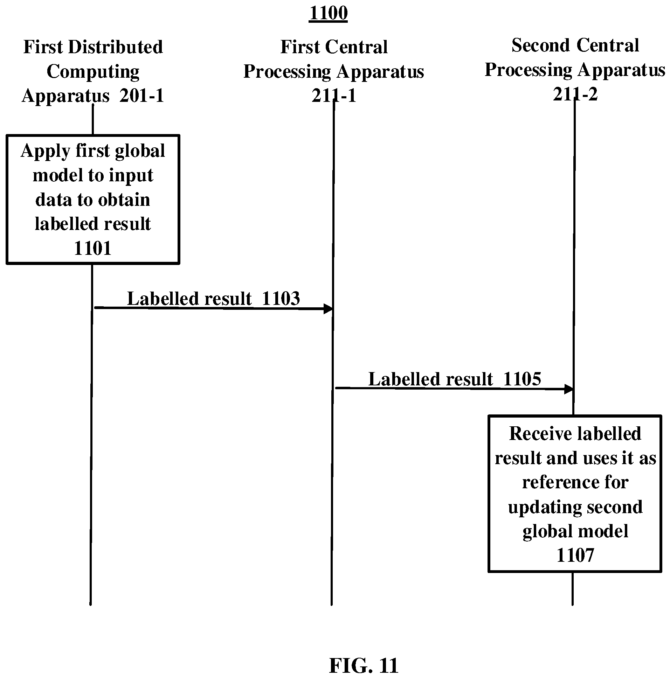

In the example of FIG. 11, the first central processing apparatus 211-1 and the second central processing apparatus 211-2 form the first and second federated learning systems, respectively, and the two federated learning systems use the first global model and the second global model which are different. The first distributed computing apparatus 201-1 and the first central processing apparatus 211-1 belong to the first federated learning system. At 1101, the first distributed computing apparatus 201-1 applies the first global model to the input data to obtain a labelled result. The input data can be obtained by the first distributed computing apparatus 201-1 in any suitable manner. At 1103, the first distributed computing apparatus 201-1 provides the labelled result to the first central processing apparatus 211-1. At 1105, the first central processing apparatus 211-1 receives and provides the labelled result to the second central processing apparatus 211-2. At 1107, the second central processing apparatus 211-2 receives the labelled result and uses it as a reference for updating the second global model. The above operations can be repeated at a certain period or occur based on specific events. For example, the first distributed computing apparatus 201-1 can initiate the above operations when it is found that the distributed computing apparatus in the second federated learning system takes a different operation from its own based on the same input data. As a result, after performance of the above operations for a period of time, although the first global model and the second global model can be different, their labelled results for the same input data will converge. As desired, the distributed computing apparatuses in the second federated learning system can similarly provide their own labelled results to the first central processing apparatus 211-1 as a reference for updating the first global model. In an embodiment, the labelled result can be made manually and provided to the second central processing apparatus 211-2 as a reference for updating the global model.

In the example of automatic driving, each of the first central processing apparatus 211-1 and the second central processing apparatus 211-2 can be, for example, a background server, or an equipment installed on the road site, for example, the equipment is integrated in the traffic light. The first distributed computing apparatus 201-1 can be an autonomous vehicle driving on a road. The first distributed computing apparatus 201-1 can obtain real-time road condition information through its own monitoring device such as a camera, and apply its own first global model to the road condition information to obtain a labelled result, which represents a corresponding automatic driving operation. The first distributed computing apparatus 201-1 can provide the labelled result to the second central processing apparatus 211-2 via the first central processing apparatus 211-1, so that the second central processing apparatus 211-2 can use the labelled result as a reference for updating its own second global model. In an embodiment, the first distributed computing apparatus 201-1 can initiate the above operations when it is found that the vehicle in the second federated learning system takes a different operation from its own based on the same road condition. In an embodiment, the labelled result can be manually made by the driver of the first distributed computing apparatus 201-1 and provided to the second central processing apparatus 211-2 for it to use as a reference for updating its own second global model.

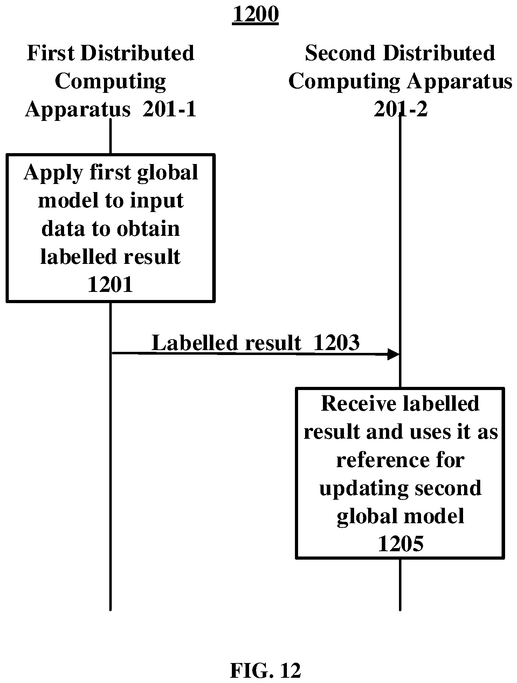

In the example of FIG. 12, the first distributed computing apparatus 201-1 and the second distributed computing apparatus 201-2 belong to different federated learning systems, respectively, and the two federated learning systems use the first global model and the second global model which are different. At 1201, the first distributed computing apparatus 201-1 applies the first global model to the input data to obtain a labelled result. The input data can be obtained by the first distributed computing apparatus 201-1 in any suitable manner. At 1203, the first distributed computing apparatus 201-1 provides the labelled results to the second distributed computing apparatus 201-2. At 1205, the second distributed computing apparatus 201-2 receives the labelled result and uses it as a reference for updating the second global model. The above operations can be repeated at a certain period or occur based on specific events. For example, the first distributed computing apparatus 201-1 can initiate the above operations when it is found that the second distributed computing apparatus 201-2 takes a different operation from its own based on the same input data. As a result, after performance of the above operations for a period of time, although the first global model and the second global model can be different, their labelled results for the same input data will converge. As desired, the second distributed computing apparatus 201-2 can similarly provide its own labelled results to the first distributed computing apparatus 201-1 as a reference for updating the first global model. In an embodiment, the labelled result can be made manually and provided to the first distributed computing apparatus 201-1 or the second distributed computing apparatus 201-2 as a reference for updating the global model.

In the example of automatic driving, each of the first distributed computing apparatus 201-1 and the second distributed computing apparatus 201-2 can be automatic driving vehicles traveling on the road. The first distributed computing apparatus 201-1 can obtain real-time road condition information through its own monitoring device such as a camera, and apply its own first global model to the road condition information to obtain a labelled result, which represents a corresponding automatic driving operation. The first distributed computing apparatus 201-1 can provide the labelled result to the second distributed computing apparatus 201-2, so that the second distributed computing apparatus 201-2 can use the labelled result as a reference for updating its own second global model. In an embodiment, the first distributed computing apparatus 201-1 can initiate the above operations when it is found that the second distributed computing apparatus 201-2 takes a different operation from its own based on the same road condition. In an embodiment, the labelled result can be made manually by the driver of the first distributed computing apparatus 201-1, and provided to the second distributed computing apparatus 201-2 as a reference for it to update the second global model.

In the examples of FIGS. 10 to 12, the labelled result is obtained based on the input data by the central processing device or the distributed computing device, respectively. In some embodiments, labelled references can be provided to the federated learning system manually. For example, in the automatic driving scenario, a traffic police on the road can make a driving operation judgment for a specific vehicle (such as a vehicle at a certain intersection) based on the road condition, and provide the operation judgment to the autonomous vehicle or central processing apparatus in each federated learning system as a reference for updating the global model.

Various exemplary electronic devices and methods according to the embodiments of the present disclosure have been described above. It should be understood that the operations or functions of these electronic devices may be combined with each other to achieve more or less operations or functions than described. The operation steps of the methods can also be combined with each other in any suitable order, so that more or fewer operations are similarly achieved than described.

It should be understood that the machine-executable instructions in the machine-readable storage medium or program product according to the embodiments of the present disclosure can be configured to perform operations corresponding to the device and method embodiments described above. When referring to the above device and method embodiments, the embodiments of the machine-readable storage medium or the program product are clear to those skilled in the art, and therefore description thereof will not be repeated herein. A machine-readable storage media and a program product for carrying or including the above-described machine-executable instructions also fall within the scope of the present disclosure. Such storage medium can comprise, but is not limited to, a floppy disk, an optical disk, a magneto-optical disk, a memory card, a memory stick, and the like.

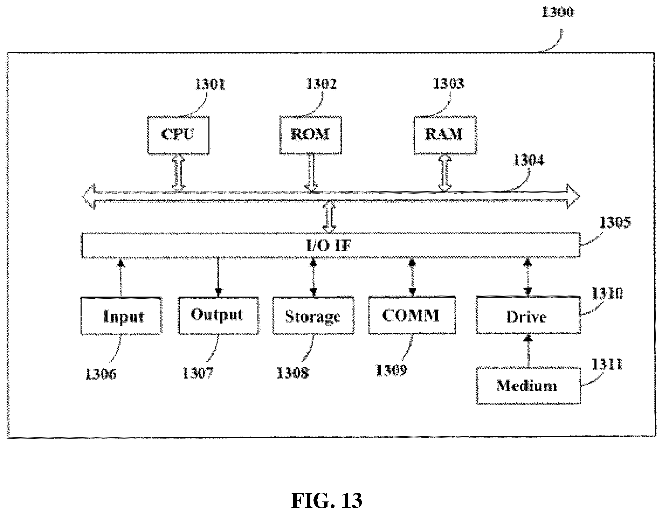

In addition, it should also be noted that the above series of processes and devices can also be implemented by software and/or firmware. In the case of being implemented by software and/or firmware, a program constituting the software is installed from a storage medium or a network to a computer having a dedicated hardware structure, such as the general-purpose personal computer 1300 shown in FIG. 13, which, when is installed with various programs, can execute various functions and so on. FIG. 13 is a block diagram showing an example structure of a personal computer in the embodiment herein. In one example, the personal computer can correspond to the central processing apparatus in accordance with the present disclosure.

In FIG. 13, a central processing unit (CPU) 1301 executes various processes in accordance with a program stored in a read-only memory (ROM) 1302 or a program loaded from storage 1308 to a random access memory (RAM) 1303. In the RAM 1303, data required when the CPU 1301 executes various processes and the like is also stored as needed.

The CPU 1301, the ROM 1302, and the RAM 1303 are connected to each other via a bus 1304. Input/output interface 1305 is also connected to bus 1304.

The following components are connected to the input/output interface 1305: an input unit 1306 including a keyboard, a mouse, etc.; an output unit 1307 including a display such as a cathode ray tube (CRT), a liquid crystal display (LCD), etc., and a speaker, etc.; the storage 1308 including a hard disk etc.; and a communication unit 1309 including a network interface card such as a LAN card, a modem, etc.. The communication unit 1309 performs communication processing via a network such as the Internet.

The driver 1310 is also connected to the input/output interface 1305 as needed. A removable medium 1311 such as a magnetic disk, an optical disk, a magneto-optical disk, a semiconductor memory or the like is mounted on the drive 1310 as needed, so that a computer program read therefrom is installed into the storage 1308 as needed.

In the case where the above-described series of processing is implemented by software, a program constituting the software is installed from a network such as the Internet or a storage medium such as the removable medium 1311.

It will be understood by those skilled in the art that such a storage medium is not limited to the removable medium 1311 shown in FIG. 13 in which a program is stored and distributed separately from the device to provide a program to the user. Examples of the removable medium 1311 include a magnetic disk (including a floppy disk (registered trademark)), an optical disk (including a compact disk read only memory (CD-ROM) and a digital versatile disk (DVD)), a magneto-optical disk (including a mini disk (MD) (registered trademark)) and a semiconductor memory. Alternatively, the storage medium may be a ROM 1302, a hard disk included in the storage section 1308, or the like, in which programs are stored, and distributed to users together with the device containing them.

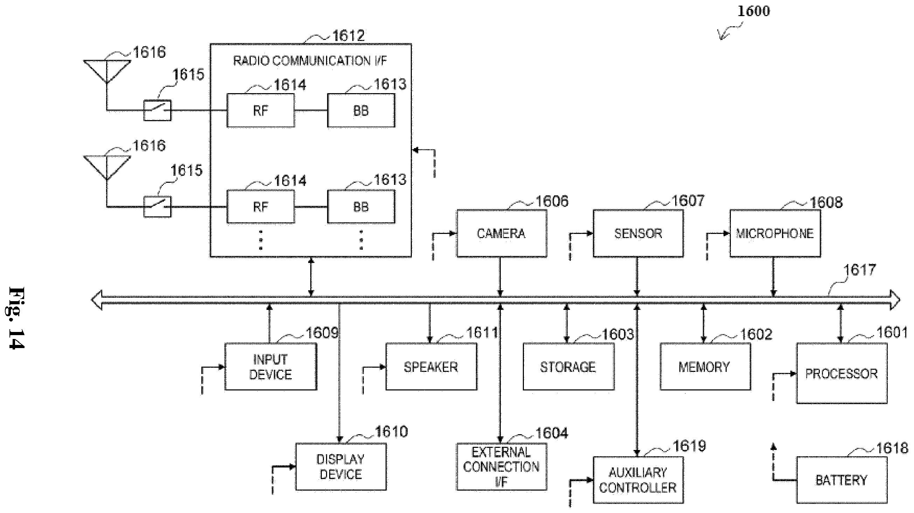

Use cases according to the present disclosure will be described below with reference to FIGs. 14 to 15.

### [Use Cases for Distributed Computing Apparatus]

### First Use Case

FIG.14 is a block diagram illustrating an example of a schematic configuration of a smartphone 1600 to which the technology of the present disclosure may be applied. The smartphone 1600 includes a processor 1601, a memory 1602, a storage 1603, an external connection interface 1604, an camera 1606, a sensor 1607, a microphone 1608, an input device 1609, a display device 1610, a speaker 1611, a radio communication interface 1612, one or more antenna switch 1615, one or more antennas 1616, a bus 1617, a battery 1618, and an auxiliary controller 1619. In one implementation, smartphone 1600 (or processor 1601) herein may correspond to the terminal devices 300B and/or 1500A described above.

The processor 1601 may be, for example, a CPU or a system on chip (SoC), and controls functions of an application layer and the other layers of the smartphone 1600. The memory 1602 includes RAM and ROM, and stores a program that is executed by the processor 1601, and data. The storage 1603 may include a storage medium such as a semiconductor memory and a hard disk. The external connection interface 1604 is an interface for connecting an external device such as a memory card and a universal serial bus (USB) device to the smartphone 1600.

The camera 1606 includes an image sensor such as a charge coupled device (CCD) and a complementary metal oxide semiconductor (CMOS), and generates a captured image. Sensor 1607 may include a group of sensors such as a measurement sensor, a gyro sensor, a geomagnetic sensor, and an acceleration sensor. The microphone 1608 converts the sounds that are input to the smartphone 1600 to audio signals. The input device 1609 includes, for example, a touch sensor configured to detect touch on a screen of the display device 1610, a keypad, a keyboard, a button, or a switch, and receives an operation or an information input from a user. The display device 1610 includes a screen such as a liquid crystal display (LCD) and an organic light emitting diode (OLED) display, and displays an output image of the smartphone 1600. The speaker 1611 converts audio signals that are output from the smartphone 1600 to sounds.

The radio communication interface 1612 supports any cellular communication scheme such as LTE, LTE-Advanced and NR, and performs radio communication. The radio communication interface 1612 may typically include, for example, a BB processor 1613 and an RF circuitry 1614. The BB processor 1613 may perform, for example, encoding/decoding, modulation/demodulation, and multiplexing/demultiplexing, and performs various types of signal processing for radio communication. Meanwhile, the RF circuit 1614 may include, for example, a mixer, a filter, and an amplifier, and transmits and receives radio signals via the antenna 1616. The radio communication interface 1612 may be a one chip module that integrates the BB processor 1613 and the RF circuit 1614 thereon. The radio communication interface 1612 may include multiple BB processors 1613 and multiple RF circuits 1614, as illustrated in FIG.14. Although FIG.14 illustrates the example in which the radio communication interface 1612 includes multiple BB processors 1613 and multiple RF circuits 1614, the radio communication interface 1612 may also include a single BB processor 1613 or a single RF circuit 1614.

Furthermore, in addition to a cellular communication scheme, the radio communication interface 1612 may support additional type of radio communication schemes, such as short-range wireless communication schemes, a near field communication schemes, and a wireless local area network (LAN) scheme. In this case, the radio communication interface 1612 may include the BB processor 1613 and the RF circuitry 1614 for each radio communication scheme.

Each of the antenna switches 1615 switches connection destinations of the antenna 1616 among multiple circuits (such as circuits for different radio communication schemes) included in the radio communication interface 1612.

Each of the antennas 1616 includes a single or multiple antenna elements (such as multiple antenna elements included in a MIMO antenna) and is used for the radio communication interface 1612 to transmit and receive radio signals. The smartphone 1600 may include multiple antennas 1616, as illustrated in FIG.14. Although FIG.14 illustrates the example in which the smartphone 1600 includes multiple antennas 1616, the smartphone 1600 may also include a single antenna 1616.

Furthermore, the smartphone 1600 may include the antenna 1616 for each radio communication scheme. In this case, the antenna switch 1615 may be omitted from the configuration of the smartphone 1600.

The bus 1617 connects the processor 1601, the memory 1602, the storage 1603, the external connection interface 1604, the camera 1606, the sensor 1607, the microphone 1608, the input device 1609, the display device 1610, the speaker 1611, the radio communication interface 1612, and the auxiliary control 1619 to each other. The battery 1618 supplies power to blocks of the smartphone 1600 illustrated in FIG. 14 via feeder lines, which are partially shown as a dashed line in the figure. The auxiliary controller 1619 operates a minimum necessary function of the smartphone 1600, for example, in a sleep mode.

### Second Use Case

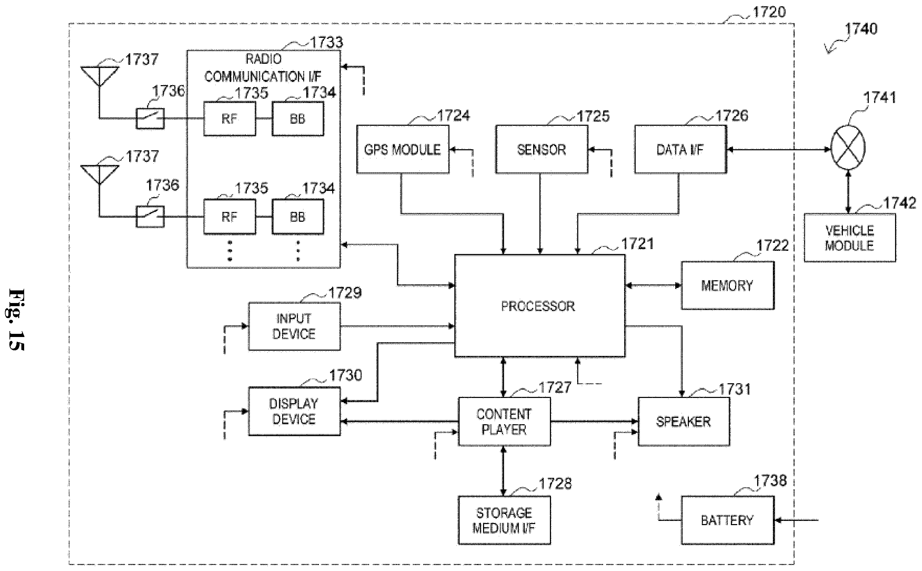

FIG.15 is a block diagram illustrating an example of a schematic configuration of a car navigation device 1720 to which the technology of the present disclosure may be applied. The car navigation device 1720 includes a processor 1721, a memory 1722, a global positioning system (GPS) module 1724, a sensor 1725, a data interface 1726, a content player 1727, a storage medium interface 1728, an input device 1729, a display device 1730, a speaker 1731, and a radio communication interface 1733, one or more antenna switches 1736, one or more antennas 1737, and a battery 1738. In one implementation, car navigation device 1720 (or processor 1721) herein may correspond to the terminal devices 300B and/or 1500A described above.

The processor 1721 may be, for example, a CPU or a SoC, and controls a navigation function and other functions of the car navigation device 1720. The memory 1722 includes RAM and ROM, and stores a program that is executed by the processor 1721, and data.

The GPS module 1724 uses GPS signals received from a GPS satellite to measure a position, such as latitude, longitude, and altitude, of the car navigation device 1720. Sensor 1725 may include a group of sensors such as a gyro sensor, a geomagnetic sensor, and an air pressure sensor. The data interface 1726 is connected to, for example, an in-vehicle network 1741 via a terminal not shown, and acquires data generated by the vehicle, such as vehicle speed data.

The content player 1727 reproduces content stored in a storage medium (such as a CD and a DVD) that is inserted into the storage medium interface 1728. The input device 1729 includes, for example, a touch sensor configured to detect touch on a screen of the display device 1730, a button, or a switch, and receives an operation or an information input from a user. The display device 1730 includes a screen such as an LCD or an OLED display, and displays an image of the navigation function or content that is reproduced. The speaker 1731 outputs sounds of the navigation function or the content that is reproduced.

The radio communication interface 1733 supports any cellular communication scheme, such as LTE, LTE-Advanced and NR, and performs radio communication. The radio communication interface 1733 may typically include, for example, a BB processor 1734 and an RF circuit 1735. The BB processor 1734 may perform, for example, encoding/decoding, modulation/demodulation, and multiplexing/demultiplexing, and performs various types of signal processing for radio communication. Meanwhile, the RF circuit 1735 may include, for example, a mixer, a filter, and an amplifier, and transmits and receives radio signals via the antenna 1737. The radio communication interface 1733 may also be a one chip module which integrates the BB processor 1734 and the RF circuit 1735 thereon. The radio communication interface 1733 may include multiple BB processors 1734 and multiple RF circuits 1735, as illustrated in FIG.15. Although FIG.15 illustrates the example in which the radio communication interface 1733 includes multiple BB processors 1734 and multiple RF circuits 1735, the radio communication interface 1733 may also include a single BB processor 1734 or a single RF circuit 1735.

Furthermore, in addition to a cellular communication scheme, the radio communication interface 1733 may support another type of radio communication scheme such as a short-range wireless communication scheme, a near-field communication scheme, and a wireless LAN scheme. In this case, the radio communication interface 1733 may include the BB processor 1734 and the RF circuit 1735 for each radio communication scheme.

Each of the antenna switches 1736 switches the connection destination of the antenna 1737 among multiple circuits (such as circuits for different radio communication schemes) included in the radio communication interface 1733.

Each of the antennas 1737 includes a single or multiple antenna elements, such as multiple antenna elements included in a MIMO antenna, and is used for the radio communication interface 1733 to transmit and receive radio signals. The car navigation device 1720 may include multiple antennas 1737, as illustrated in FIG.15. Although FIG. 15 illustrates the example in which the car navigation device 1720 includes multiple antennas 1737, the car navigation device 1720 may also include a single antenna 1737.

Furthermore, the car navigation device 1720 may include the antenna 1737 for each radio communication scheme. In this case, the antenna switch 1736 may be omitted from the configuration of the car navigation device 1720.

The battery 1738 supplies power to blocks of the car navigation device 1720 illustrated in FIG.15 via feeder lines that are partially shown as dashed lines in the figure. Battery 1738 accumulates power supplied from the vehicle.

The technology of the present disclosure may also be realized as an in-vehicle system (or vehicle) 1740 including one or more blocks of the car navigation device 1720, the in-vehicle network 1741, and the vehicle module 1742. The vehicle module 1742 generates vehicle data such as vehicle speed, engine speed, and faults information, and outputs the generated data to the in-vehicle network 1741.

The solutions of the present disclosure may be implemented in the following exemplary manners:
1. An electronic device for a central processing apparatus, wherein the central processing apparatus performs federated learning (FL) with a plurality of distributed computing apparatuses, and the electronic device comprises a processing circuit configured to cause the central processing apparatus to:
   for a first distributed computing apparatus of the plurality of distributed computing apparatuses:
   receive a report message from the first distributed computing apparatus, the report message including at least one of training data set information or device information of the first distributed computing apparatus;
   evaluate FL performance of the first distributed computing apparatus based on the report message of the first distributed computing apparatus;
   determine wireless resource requirements of the first distributed computing apparatus based on the FL performance of the first distributed computing apparatus; and
   notify a wireless network, via a message, of configuring wireless resources for the first distributed computing apparatus based on the wireless resource requirements.
2. The electronic device according to article 1, wherein the training data set information comprises at least one of attribute information, data amount, data freshness, or data diversity of the training data, and the evaluating of the FL performance of the first distributed computing apparatus comprises at least one of the following:
   the more the effective dimensions in the attribute information of the first distributed computing apparatus, the better the FL performance of the first distributed computing apparatus;
   the greater the amount of data of the first distributed computing apparatus, the better the FL performance of the first distributed computing apparatus;
   the fresher the data of the first distributed computing apparatus, the better the FL performance of the first distributed computing apparatus; or
   the more diverse the data of the first distributed computing apparatus, the better the FL performance of the first distributed computing apparatus.
3. The electronic device according to article 1, wherein the device information comprises at least one of battery power or processing capability information, and the evaluating of the FL performance of the first distributed computing apparatus comprises at least one of the following:
   the higher the battery power of the first distributed computing apparatus, the better the FL performance of the first distributed computing apparatus; or
   the higher the processing capability of the first distributed computing apparatus, the better the FL performance of the first distributed computing apparatus.
4. The electronic device according to article 1, wherein the evaluating of the FL performance of the first distributed computing apparatus comprises:
   the better the uplink and/or downlink quality of the first distributed computing apparatus, the better the FL performance of the first distributed computing apparatus; or
   the more the uplink and/or downlink time-frequency resources of the first distributed computing apparatus, the better the FL performance of the first distributed computing apparatus.
5. The electronic device according to article 1, wherein the determining of the wireless resource requirements of the first distributed computing apparatus comprises: the better the FL performance of the first distributed computing apparatus is, the higher the wireless resource requirements are determined for the first distributed computing apparatus, the wireless resource requirements specifying at least one of uplink or downlink transmission power, or uplink or downlink time-frequency resources of the first distributed computing apparatus.
6. The electronic device according to article 1, wherein the processing circuit is further configured to cause the central processing apparatus to:
   based on at least one of the training data set information or the device information, determine or update the distributed computing apparatuses participating in FL.
7. The electronic device according to article 6, wherein the device information comprises device identification information, and the processing circuit is further configured to cause the central processing apparatus to:
   query the uplink or downlink quality of one or more distributed computing apparatuses by corresponding device identification information; and
   at initial of FL or during FL, choose distributed computing apparatuses whose uplink or downlink quality meets a predetermined threshold from the one or more distributed computing apparatuses to participate in the FL.
8. The electronic device according to article 6, wherein the device information comprises device identification information, and the processing circuit is further configured to cause the central processing apparatus to:
   query location information of one or more distributed computing apparatuses by corresponding device identification information; and
   at initial of FL or during FL, choose distributed computing apparatuses with diverse locations from the one or more distributed computing apparatuses to participate in the FL.
9. The electronic device according to article 6, wherein the processing circuit is further configured to cause the central processing apparatus to:
   at initial of FL or during FL, choose distributed computing apparatuses with diverse data from the one or more distributed computing apparatuses to participate in the FL.
10. The electronic device according to article 1, wherein the processing circuit is further configured to cause the central processing apparatus to:
   receive model update information from the first distributed computing apparatus; and
   aggregate the model update information with a corresponding weight based on the FL performance of the first distributed computing apparatus, to obtain a global model.
11. The electronic device according to article 10, wherein the processing circuit is further configured to cause the central processing apparatus to:
   input a first data into the global model to obtain a labelled result, and provide the labelled result to a further apparatus as a reference for updating a model, wherein the model used by the further apparatus is different from the global model.
12. The electronic device according to article 10, wherein the processing circuit is further configured to cause the central processing apparatus to:
   receive a first data and a labelled result from a further apparatus, and use the first data and the labelled result as a reference for updating the global model, wherein the further apparatus uses a different model than the global model.
13. An electronic device for a first distributed computing apparatus, wherein the first distributed computing apparatus performs federated learning (FL) with a central processing apparatus and additional distributed computing apparatuses, and the electronic device comprises a processing circuit configured to cause the first distributed computing apparatus to:
   send a report message to the central processing apparatus, the report message including at least one of training data set information or device information of the first distributed computing apparatus; and
   receive wireless resource configuration information from a wireless network, wherein the wireless resource configuration information is determined by the wireless network based on an indication message from the central processing apparatus.
14. The electronic device according to article 13, wherein the training data set information comprises at least one of attribute information, data amount, data freshness, or data diversity of the training data, and at least one of the following is true:
   the more complete attributes of the first distributed computing apparatus, the better the FL performance of the first distributed computing apparatus;
   the greater the amount of data of the first distributed computing apparatus, the better the FL performance of the first distributed computing apparatus;
   the fresher the data of the first distributed computing apparatus, the better the FL performance of the first distributed computing apparatus; or
   the more diverse the data of the first distributed computing apparatus, the better the FL performance of the first distributed computing apparatus.
15. The electronic device according to article 13, wherein the device information comprises at least one of battery power or processing capability information, and at least one of the following is true:
   the higher the battery power of the first distributed computing apparatus, the better the FL performance of the first distributed computing apparatus; or
   the higher the processing capability of the first distributed computing apparatus, the better the FL performance of the first distributed computing apparatus.
16. The electronic device according to article 13, wherein at least one of the following is true:
   the better the uplink and/or downlink quality of the first distributed computing apparatus, the better the FL performance of the first distributed computing apparatus; or
   the more the uplink and/or downlink time-frequency resources of the first distributed computing apparatus, the better the FL performance of the first distributed computing apparatus.
17. The electronic device according to article 13, wherein the better the FL performance of the first distributed computing apparatus is, the higher the wireless resource requirements are determined for the first distributed computing apparatus, the wireless resource requirements specifying at least one of uplink or downlink transmission power, or uplink or downlink time-frequency resources of the first distributed computing apparatus.
18. The electronic device according to article 15, wherein the processing circuit is further configured to cause the first distributed computing apparatus to:
   send model update information of the first distributed computing apparatus to the central processing apparatus, wherein the model update information is used to be weighted accordingly based on the FL performance of the first distributed computing apparatus when aggregated with other model update information, so as to obtain a global model.
19. The electronic device according to article 18, wherein the processing circuit is further configured to cause the first distributed computing apparatus to:
   input a first data into the global model to obtain a labelled result, and provide the labelled result to a further apparatus as a reference for updating a model, wherein the model used by the further apparatus is different from the global model.
20. The electronic device according to article 18, wherein the processing circuit is further configured to cause the first distributed computing apparatus to:
   receive a first data and a labelled result from a further apparatus, and use the first data and the labelled result as a reference for updating the global model, wherein the further apparatus uses a different model than the global model.
21. A method for federated learning (FL), wherein a central processing apparatus and a plurality of distributed computing apparatuses perform the FL, the method comprising:
   by the central processing apparatus, for a first distributed computing apparatus of the plurality of distributed computing apparatuses:
   receiving a report message from the first distributed computing apparatus, the report message including at least one of training data set information or device information of the first distributed computing apparatus;
   evaluating FL performance of the first distributed computing apparatus based on the report message of the first distributed computing apparatus;
   determining wireless resource requirements of the first distributed computing apparatus based on the FL performance of the first distributed computing apparatus; and
   notifying a wireless network, via a message, of configuring wireless resources for the first distributed computing apparatus based on the wireless resource requirements.
22. A method for federated learning (FL), wherein a central processing apparatus and a plurality of distributed computing apparatuses perform the FL, the method comprising:
   by a first distributed computing apparatus of the plurality of distributed computing apparatuses:
   sending a report message to the central processing apparatus, the report message including at least one of training data set information or device information of the first distributed computing apparatus; and
   receiving wireless resource configuration information from a wireless network, wherein the wireless resource configuration information is determined by the wireless network based on an indication message from the central processing apparatus.
23. A computer-readable storage medium storing one or more instructions that, when executed by one or more processing circuits of an electronic device, cause the electronic device to perform the method according to any of articles 21 to 22.
24. An apparatus for machine learning, comprising units for performing the method according to any of articles 21 to 22.

The exemplary embodiments of the present disclosure have been described above with reference to the drawings, but the present disclosure is of course not limited to the above examples. Those skilled in the art can obtain various changes and modifications within the scope of the appended claims, and it should be understood that these changes and modifications will naturally fall within the technical scope of the present disclosure.

For example, a plurality of functions included in one unit in the above embodiments may be implemented by separate devices. Alternatively, the multiple functions implemented by the multiple units in the above embodiments may be implemented by separate devices, respectively. In addition, one of the above functions can be realized by multiple units. Needless to say, such a configuration is included in the technical scope of the present disclosure.

In this specification, the steps described in the flowchart include not only processes performed in time series in the described order, but also processes performed in parallel or individually rather than necessarily in time series. In addition, even in the steps processed in time series, needless to say, the order can be changed appropriately.

Although the present disclosure and its advantages have been described in detail, it should be understood that various modifications, replacements, and changes can be made without departing from the spirit and scope of the present disclosure as defined by the appended claims. Moreover, the terms "include", "comprise", or their any other variant in the embodiments of the present disclosure is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

## Claims

1. An electronic device for a central processing apparatus, wherein the central processing apparatus performs federated learning (FL) with a plurality of distributed computing apparatuses, and the electronic device comprises a processing circuit configured to cause the central processing apparatus to:
for a first distributed computing apparatus of the plurality of distributed computing apparatuses:
receive a report message from the first distributed computing apparatus, the report message including at least one of training data set information or device information of the first distributed computing apparatus;
evaluate FL performance of the first distributed computing apparatus based on the report message of the first distributed computing apparatus;
determine wireless resource requirements of the first distributed computing apparatus based on the FL performance of the first distributed computing apparatus; and
notify a wireless network, via a message, of configuring wireless resources for the first distributed computing apparatus based on the wireless resource requirements.

2. The electronic device according to claim 1, wherein the training data set information comprises at least one of attribute information, data amount, data freshness, or data diversity of the training data, and the evaluating of the FL performance of the first distributed computing apparatus comprises at least one of the following:
the more the effective dimensions in the attribute information of the first distributed computing apparatus, the better the FL performance of the first distributed computing apparatus;
the greater the amount of data of the first distributed computing apparatus, the better the FL performance of the first distributed computing apparatus;
the fresher the data of the first distributed computing apparatus, the better the FL performance of the first distributed computing apparatus; or
the more diverse the data of the first distributed computing apparatus, the better the FL performance of the first distributed computing apparatus.

3. The electronic device according to claim 1, wherein the device information comprises at least one of battery power or processing capability information, and the evaluating of the FL performance of the first distributed computing apparatus comprises at least one of the following:
the higher the battery power of the first distributed computing apparatus, the better the FL performance of the first distributed computing apparatus; or
the higher the processing capability of the first distributed computing apparatus, the better the FL performance of the first distributed computing apparatus.

4. The electronic device according to claim 1, wherein the evaluating of the FL performance of the first distributed computing apparatus comprises:
the better the uplink and/or downlink quality of the first distributed computing apparatus, the better the FL performance of the first distributed computing apparatus; or
the more the uplink and/or downlink time-frequency resources of the first distributed computing apparatus, the better the FL performance of the first distributed computing apparatus.

5. The electronic device according to claim 1, wherein the determining of the wireless resource requirements of the first distributed computing apparatus comprises: the better the FL performance of the first distributed computing apparatus is, the higher the wireless resource requirements are determined for the first distributed computing apparatus, the wireless resource requirements specifying at least one of uplink or downlink transmission power, or uplink or downlink time-frequency resources of the first distributed computing apparatus.

6. The electronic device according to claim 1, wherein the processing circuit is further configured to cause the central processing apparatus to:
based on at least one of the training data set information or the device information, determine or update the distributed computing apparatuses participating in the FL.

7. The electronic device according to claim 6, wherein the device information comprises device identification information, and the processing circuit is further configured to cause the central processing apparatus to:
query the uplink or downlink quality of one or more distributed computing apparatuses by corresponding device identification information; and
at initial of FL or during FL, choose distributed computing apparatuses whose uplink or downlink quality meets a predetermined threshold from the one or more distributed computing apparatuses to participate in the FL.

8. The electronic device according to claim 6, wherein the device information comprises device identification information, and the processing circuit is further configured to cause the central processing apparatus to:
query location information of one or more distributed computing apparatuses by corresponding device identification information; and
at initial of FL or during FL, choose distributed computing apparatuses with diverse locations from the one or more distributed computing apparatuses to participate in the FL.

9. The electronic device according to claim 6, wherein the processing circuit is further configured to cause the central processing apparatus to:
at initial of FL or during FL, choose distributed computing apparatuses with diverse data from the one or more distributed computing apparatuses to participate in the FL.

10. The electronic device according to claim 1, wherein the processing circuit is further configured to cause the central processing apparatus to:
receive model update information from the first distributed computing apparatus; and
aggregate the model update information with a corresponding weight based on the FL performance of the first distributed computing apparatus, to obtain a global model.

11. The electronic device according to claim 10, wherein the processing circuit is further configured to cause the central processing apparatus to:
input a first data into the global model to obtain a labelled result, and provide the labelled result to a further apparatus as a reference for updating a model, wherein the model used by the further apparatus is different from the global model.

12. The electronic device according to claim 10, wherein the processing circuit is further configured to cause the central processing apparatus to:
receive a first data and a labelled result from a further apparatus, and use the first data and the labelled result as a reference for updating the global model, wherein the further apparatus uses a different model than the global model.

13. An electronic device for a first distributed computing apparatus, wherein the first distributed computing apparatus performs federated learning (FL) with a central processing apparatus and additional distributed computing apparatuses, and the electronic device comprises a processing circuit configured to cause the first distributed computing apparatus to:
send a report message to the central processing apparatus, the report message including at least one of training data set information or device information of the first distributed computing apparatus; and
receive wireless resource configuration information from a wireless network, wherein the wireless resource configuration information is determined by the wireless network based on an indication message from the central processing apparatus.

14. The electronic device according to claim 13, wherein the training data set information comprises at least one of attribute information, data amount, data freshness, or data diversity of the training data, and at least one of the following is true:
the more complete the attributes of the first distributed computing apparatus, the better the FL performance of the first distributed computing apparatus;
the greater the amount of data of the first distributed computing apparatus, the better the FL performance of the first distributed computing apparatus;
the fresher the data of the first distributed computing apparatus, the better the FL performance of the first distributed computing apparatus; or
the more diverse the data of the first distributed computing apparatus, the better the FL performance of the first distributed computing apparatus.

15. The electronic device according to claim 13, wherein the device information comprises at least one of battery power or processing capability information, and at least one of the following is true:
the higher the battery power of the first distributed computing apparatus, the better the FL performance of the first distributed computing apparatus; or
the higher the processing capability of the first distributed computing apparatus, the better the FL performance of the first distributed computing apparatus.

16. The electronic device according to claim 13, wherein at least one of the following is true:
the better the uplink and/or downlink quality of the first distributed computing apparatus, the better the FL performance of the first distributed computing apparatus; or
the more the uplink and/or downlink time-frequency resources of the first distributed computing apparatus, the better the FL performance of the first distributed computing apparatus.

17. The electronic device according to claim 13, wherein the better the FL performance of the first distributed computing apparatus is, the higher the wireless resource requirements are determined for the first distributed computing apparatus, the wireless resource requirements specifying at least one of uplink or downlink transmission power, or uplink or downlink time-frequency resources of the first distributed computing apparatus.

18. The electronic device according to claim 15, wherein the processing circuit is further configured to cause the first distributed computing apparatus to:
send model update information of the first distributed computing apparatus to the central processing apparatus, wherein the model update information is used to be weighted accordingly based on the FL performance of the first distributed computing apparatus when aggregated with other model update information, so as to obtain a global model.

19. The electronic device according to claim 18, wherein the processing circuit is further configured to cause the first distributed computing apparatus to:
input a first data into the global model to obtain a labelled result, and provide the labelled result to a further apparatus as a reference for updating a model, wherein the model used by the further apparatus is different from the global model.

20. The electronic device according to claim 18, wherein the processing circuit is further configured to cause the first distributed computing apparatus to:
receive a first data and a labelled result from a further apparatus, and use the first data and the labelled result as a reference for updating the global model, wherein the further apparatus uses a different model than the global model.

21. A method for federated learning (FL), wherein a central processing apparatus and a plurality of distributed computing apparatuses perform the FL, the method comprising:
by the central processing apparatus, for a first distributed computing apparatus of the plurality of distributed computing apparatuses:
receiving a report message from the first distributed computing apparatus, the report message including at least one of training data set information or device information of the first distributed computing apparatus;
evaluating FL performance of the first distributed computing apparatus based on the report message of the first distributed computing apparatus;
determining wireless resource requirements of the first distributed computing apparatus based on the FL performance of the first distributed computing apparatus; and
notifying a wireless network, via a message, of configuring wireless resources for the first distributed computing apparatus based on the wireless resource requirements.

22. A method for federated learning (FL), wherein a central processing apparatus and a plurality of distributed computing apparatuses perform the FL, the method comprising:
by a first distributed computing apparatus of the plurality of distributed computing apparatuses:
sending a report message to the central processing apparatus, the report message including at least one of training data set information or device information of the first distributed computing apparatus; and
receiving wireless resource configuration information from a wireless network, wherein the wireless resource configuration information is determined by the wireless network based on an indication message from the central processing apparatus.

23. A computer-readable storage medium storing one or more instructions that, when executed by one or more processing circuits of an electronic device, cause the electronic device to perform the method according to any of claims 21 to 22.

24. An apparatus for machine learning, comprising units for performing the method according to any of claims 21 to 22.

25. A computer program product comprising instructions which, when executed by a computer, cause the computer to perform the method according to any of claims 21 to 22.
